# EUROPEAN PATENT APPLICATION

(11) **EP 4 827 221 A1**
(43) Date of publication of application: **21.10.2026**
(21) Application number: 24915109.3
(22) Date of filing: 18.12.2024
(51) Int. Cl.: H04W 74/00, H04B 7/185

(54) **CALLED METHOD FOR TERMINAL DEVICE, TERMINAL DEVICE, AND CHIP SYSTEM**

(30) Priority: 03.01.2024 CN 202410009136; 12.04.2024 CN 202410446714
(71) Applicant: Honor Device Co., Ltd., Shenzhen, Guangdong 518040 (CN)
(72) Inventor: SHEN, Li, Shenzhen, Guangdong 518040 (CN); HE, Yanzhao, Shenzhen, Guangdong 518040 (CN); ZHONG, Rui, Shenzhen, Guangdong 518040 (CN); SONG, Hao, Shenzhen, Guangdong 518040 (CN)
(74) Representative: Epping - Hermann - Fischer
(86) International application number: PCT/CN2024/140222
(87) International publication number: WO 2025/145894

(57) **Abstract**

This application discloses a terminated call method for a terminal device, a terminal device, and a chip system, and pertains to the field of communication technologies. The method is applied to a terminal device, and includes: enabling a satellite communication function of the terminal device; receiving a paging message from a satellite when the terminal device is in a satellite communication standby state; and presenting first prompt information after the paging message is received and when a preset interface is not displayed currently, where the first prompt information is used to prompt a user to assist the terminal device in performing a satellite pointing operation. In this application, when receiving the paging message from the satellite, the terminal device may present the first prompt information. In this way, the user can quickly perceive that there is a satellite paging event, to quickly assist the terminal device in entering a satellite pointing interface to perform the satellite pointing operation, thereby accelerating establishment of the connection to the satellite, ensuring that a notified service is normally performed, and improving a success rate of implementing an emergency service such as an incoming call by the satellite.

## Description

This application claims priority to Chinese Patent Application No. 202410009136.2, filed with the China National Intellectual Property Administration on January 3, 2024 and entitled "TERMINATED CALL METHOD FOR TERMINAL DEVICE, TERMINAL DEVICE, STORAGE MEDIUM, AND CHIP SYSTEM", which is incorporated herein by reference in its entirety. This application claims priority to Chinese Patent Application No. 202410446714.9, filed with the China National Intellectual Property Administration on April 12, 2024 and entitled "TERMINATED CALL METHOD FOR TERMINAL DEVICE, TERMINAL DEVICE, AND CHIP SYSTEM", which is incorporated herein by reference in its entirety.

### TECHNICAL FIELD

This application relates to the field of communication technologies, and in particular, to a terminated call method for a terminal device, a terminal device, and a chip system.

### BACKGROUND

With development of wireless technologies, more terminal devices are configured with a satellite communication mode. The satellite communication mode is a supplementary means to a conventional communication service. Generally, the satellite communication mode of the terminal device may be applied to scenarios such as emergency communication and emergency rescue positioning. When the terminal device cannot perform communication by using a communication means such as a cellular network, the terminal device may implement basic services such as a voice and an SMS message through satellite communication.

However, because the terminal device usually fails to connect to a satellite in a timely manner, the terminal device usually cannot respond to a paging message from the satellite.

### SUMMARY

Embodiments of this application provide a terminated call method for a terminal device, a terminal device, and a chip system, to optimize satellite communication performance. The terminated call method for a terminal device, the terminal device, and the chip system can be used to improve timeliness of connection between the terminal device and a satellite and improve a success rate of implementing an emergency service such as an incoming call by the satellite.

According to a first aspect, an embodiment of this application provides a terminated call method for a terminal device, applied to a terminal device. The method includes:
enabling a satellite communication function of the terminal device; receiving a paging message from a satellite when the terminal device is in a satellite communication standby state, where the satellite communication standby state is a state in which no satellite pointing operation is performed when the satellite communication function is enabled; and presenting first prompt information after the paging message is received and when a preset interface is not displayed currently, where the first prompt information is used to prompt a user to assist the terminal device in performing a satellite pointing operation.

It should be noted that the preset interface is a preset interface related to the satellite pointing operation, and the preset interface may also be referred to as a satellite pointing interface. An interface other than the satellite pointing operation may be referred to as a non-satellite pointing interface. The non-satellite pointing interface is an interface displayed when no satellite pointing operation is performed. For example, the non-satellite pointing interface may be a desktop of the terminal device, a lock screen interface, or an application interface of a non-satellite application such as a social application. The satellite pointing operation may include an operation of searching for a satellite (also referred to as a satellite search operation), an operation of performing angle alignment with the satellite (also referred to as an angle alignment operation), an operation of connecting to the satellite (also referred to as a satellite connection operation), and an operation of indicating to maintain the connection to the satellite (also referred to as a connection maintenance operation).

In an example, the preset interface may include a satellite search indication interface, an alignment indication interface corresponding to an angle alignment operation, a connection process indication interface corresponding to a satellite connection operation, and a connection maintenance indication interface corresponding to a connection maintenance operation. The connection maintenance indication interface includes an interface displayed after the terminal device establishes a connection to the satellite and when no satellite service is performed (this interface may be referred to as a connection completion indication interface), and an interface displayed when the terminal device performs a satellite service. That is, the interface displayed when the terminal device performs the satellite service is also a satellite pointing interface.

It should be noted that, after the terminal device is connected to the satellite, if the terminal device cannot maintain angle alignment with the satellite, the terminal device and the satellite may be disconnected, and consequently, the service cannot be performed. Therefore, after the terminal device is connected to the satellite, the terminal device needs to ensure angle alignment with the satellite to maintain the connection to the satellite. To achieve this objective, the terminal device needs to indicate the user to maintain a current handheld posture to maintain a current angle between a mobile phone and the satellite. The operation of indicating the user is an operation of indicating to maintain the connection to the satellite.

It should be further noted that, after the satellite communication function of the terminal device is enabled, the terminal device may be in a satellite pointing state, or may be in the satellite communication standby state. The satellite pointing state may be a state in which the terminal device is performing a satellite pointing operation, and the satellite pointing state may include a strong satellite pointing state, a weak satellite pointing state, and the like. The strong satellite pointing state may be a state in which the terminal device is well aligned with the satellite with respect to both an azimuth angle and an elevation angle. In other words, the strong satellite pointing state may be a state in which signal strength of a satellite signal received by the terminal device is high (the signal strength is greater than a first value). Alternatively, the strong satellite pointing state may be a state in which the terminal device maintains a connection to the satellite after the terminal device establishes the connection to the satellite. The weak satellite pointing state may be a state in which the terminal device is moderately or poorly aligned with the satellite with respect to an azimuth angle and an elevation angle. In other words, the weak satellite pointing state may be a state in which signal strength of a satellite signal received by the terminal device is low (the signal strength is less than a second value, and the second value is less than or equal to the first value). Alternatively, the strong satellite pointing state may be a state in which the terminal device has established a connection to the satellite in a process of performing a satellite pointing operation, and the weak satellite pointing state may be a state in which the terminal device has not established a connection to the satellite in a process of performing a satellite pointing operation.

In the foregoing embodiment, when receiving the paging message from the satellite, the terminal device may present the first prompt information. In this way, the user can quickly perceive that there is a satellite paging event, so that the user can quickly trigger the terminal device to perform a satellite pointing operation in the preset interface, thereby accelerating establishment of the connection to the satellite, improving timeliness of the connection between the terminal device and the satellite, facilitating normal execution of a notified service, and improving a success rate of implementing an emergency service such as an incoming call by the satellite.

In an example of this application, before receiving the paging message from the satellite, the terminal device may further perform an antenna tuning operation on at least one antenna for receiving a satellite signal in the terminal device when the terminal device is in the satellite communication standby state, so that receiving performance of each of the at least one antenna for receiving a satellite signal meets a preset condition.

It should be noted that the at least one antenna for receiving a satellite signal may include at least one of a dedicated antenna and a common antenna, and the dedicated antenna is an antenna specifically configured to receive a satellite signal.

In an example, that receiving performance of at least one of the at least one antenna for receiving a satellite signal meets the preset condition may include: The receiving performance of the at least one of the at least one antenna for receiving a satellite signal is improved. For example, the preset condition may be that performance of a tuned antenna is an antenna with highest performance in all antennas of the terminal device. Alternatively, the preset condition is that performance of a tuned antenna is N times performance before tuning, where N is greater than 1. Alternatively, the preset condition is that performance of a tuned antenna is optimal performance that can be achieved by the antenna.

In this way, when the terminal device is in the satellite communication standby state, antenna performance can be improved by performing a tuning operation on at least one antenna, thereby increasing a possibility that the terminal device is successfully connected to the satellite.

In an example of this application, after presenting the first prompt information, the terminal device may further initiate a random access (Random Access Channel, RACH) process; when no connection to the satellite is established, determine a quantity of times of initiating the RACH process; and when the quantity of times of initiating the RACH process is less than or equal to a first threshold, return an operation of initiating the RACH process; or when the quantity of times of initiating the RACH process is greater than a first threshold and responding to a target service fails, present second prompt information if the preset interface is displayed currently, where the second prompt information is used to indicate to maintain the preset interface.

It should be noted that, that responding to the target service fails may mean that the terminal device does not respond to the paging message, or the terminal device fails to respond to the paging message. Alternatively, that responding to the target service fails may mean that the terminal device cannot perform the target service by using the satellite, in other words, the terminal device responds to the paging message but fails to perform the target service. A case in which the terminal device does not respond to the paging message may include a case in which the terminal device does not send any message to the satellite after receiving the paging message, or may include a case in which the terminal device fails to send a response message to the satellite after receiving the paging message.

In this way, when the connection to the satellite fails to be established, a possibility of communication connection between the terminal device and the satellite can be improved by performing the RACH process a plurality of times.

In an example of this application, after presenting the first prompt information, the terminal device may further perform the satellite pointing operation to establish a connection to the satellite; and receive user prompt information from the satellite after the connection to the satellite is established, where the user prompt information includes information about a user who pages the terminal device by using the paging message.

In this way, based on the user prompt information, the user who uses the terminal device can learn of the information about the user who calls the terminal device, so that whether to call back can be determined based on the user information, thereby improving autonomy of the user.

In an example of this application, the information about the user is user information in a preset whitelist.

In this way, the preset whitelist is set, so that a prompt of the satellite is more targeted.

In an example of this application, after the terminal device sets the satellite communication function of the terminal device to an enabled state, when there is no dedicated antenna in antennas of the terminal device, the terminal device may further set at least one antenna for receiving a cellular network signal in the terminal device to be in a receiving mode for receiving a satellite signal, where the dedicated antenna is an antenna specifically configured to receive a satellite signal.

In this way, it is ensured that an antenna that can receive a satellite signal exists in the terminal device.

In an example of this application, before setting the satellite communication function of the terminal device to the enabled state, the terminal device may further detect a scenario in which the terminal device is located.

Based on this, an operation that the terminal device sets the satellite communication function of the terminal device to the enabled state includes:
setting the satellite communication function of the terminal device to the enabled state when the terminal device is in an outdoor scenario, where the outdoor scenario is a scenario in which strength of a cellular network signal is less than or equal to preset strength.

In this way, the satellite communication function is actively enabled in the outdoor scenario, so that it is ensured that a communication function of the terminal device runs normally.

In an example of this application, an operation of presenting the first prompt information after the paging message is received and when the preset interface is not displayed currently includes:
after the paging message is received and when the preset interface is not displayed currently, if the paging message is not responded to, presenting the first prompt information.

In this way, the first prompt information is presented on different occasions, thereby enriching prompt occasions.

In an example of this application, an operation of presenting the first prompt information after the paging message is received and when the preset interface is not displayed currently includes:
presenting the first prompt information in at least one prompt manner after the paging message is received and when the preset interface is not displayed currently, where the at least one prompt manner includes a voice prompt manner, a vibration prompt manner, and an interface prompt manner.

In this way, prompt is performed in a plurality of manners, so that prompt manners of the terminal device are enriched.

According to a second aspect, another terminated call method for a terminal device is provided, applied to a terminal device. The method includes:
receiving a paging message from a target satellite when a cellular network cannot be used currently; and presenting first prompt information when a non-satellite pointing interface is displayed currently, where the first prompt information is used to indicate to perform a satellite pointing operation, and the non-satellite pointing interface is an interface displayed when no satellite pointing operation is performed.

Currently, when a satellite communication function of the terminal device is enabled, the terminal device needs to actively initiate a service. Even if the terminal device wants to receive a message such as a terminated call and an SMS message from a satellite, the terminal device needs to actively perform a satellite pointing operation. As a result, the terminal device is not connected to the satellite in a timely manner.

In the foregoing embodiment, when the cellular network cannot be used and the paging message from the target satellite is received, the terminal device may present the first prompt information. In this way, the user can quickly perceive that there is a satellite paging event, so that the user can quickly enter a satellite pointing interface to perform a satellite pointing operation, thereby accelerating establishment of the connection to the satellite, improving timeliness of the connection between the terminal device and the satellite, facilitating normal execution of a notified service, and improving a success rate of implementing an emergency service such as an incoming call by the satellite.

In an example of this application, an operation of receiving the paging message (for example, a paging message) from the target satellite when the cellular network cannot be used currently includes:
when the cellular network cannot be used currently, setting at least one antenna of the terminal device to be in a receiving mode for receiving a satellite signal; and receiving the paging message from the target satellite through the set antenna.

In an example of this application, an operation of receiving the paging message from the target satellite when the cellular network cannot be used currently includes:
when the cellular network cannot be used currently and the terminal device is in an outdoor scenario, receiving the paging message from the target satellite.

In an example of this application, an operation of receiving the paging message from the target satellite when the cellular network cannot be used currently includes:
when the cellular network cannot be used currently, switching a communication mode of the terminal device to a satellite communication mode; and receiving the paging message from the target satellite in the satellite communication mode.

In an example of this application, an operation of presenting the first prompt information when the non-satellite pointing interface is displayed currently includes:
when the non-satellite pointing interface is displayed currently, if the paging message is not responded to, presenting the first prompt information.

In an example of this application, an operation of presenting the first prompt information when the non-satellite pointing interface is displayed currently includes:
when the non-satellite pointing interface is displayed currently, presenting the first prompt information in at least one of a voice prompt manner, a vibration prompt manner, and an interface prompt manner.

In an example of this application, an operation of presenting the first prompt information when the non-satellite pointing interface is displayed currently includes:
presenting the first prompt information and initiating a random access channel RACH process when the non-satellite pointing interface is displayed currently and the terminal device meets a service requirement of a target service.

In an example of this application, after the presenting the first prompt information and initiating a random access channel RACH process when the non-satellite pointing interface is displayed currently and the terminal device meets a service requirement of a target service, the method may further include:
when responding to the target service fails, determining a quantity of times of initiating the RACH process; and presenting second prompt information when the quantity of times of initiating the RACH process is greater than a first threshold, where the second prompt information is used to indicate to maintain a satellite pointing interface.

In an example of this application, the method further includes:
performing an antenna tuning operation on at least one antenna in the terminal device when the terminal device is in the satellite communication mode.

According to a third aspect, a terminal device is provided. A structure of the terminal device includes one or more processors and a memory. The one or more processors may include a processor (which may be referred to as a satellite processor) for satellite communication. The memory is configured to store a program that supports the terminal device in performing the terminated call method for a terminal device according to the first aspect, and store data for implementing the terminated call method for a terminal device according to the first aspect. The processor is configured to perform the program stored in the memory. The terminal device may further include a communication bus, and the communication bus is configured to establish a connection between the processor and the memory.

According to a fourth aspect, a satellite is provided. The satellite can send fourth prompt information to a terminal device when a communication connection to the terminal device is established, where the fourth prompt information is used to indicate to set a preset whitelist.

After the satellite sends a paging message to the terminal device, when no response message of the terminal device for responding to the paging message is received, if a communication connection to the terminal device is established after paging ends, the satellite sends user prompt information to the terminal device, where the user prompt information includes information about a user who pages the terminal device by using the paging message.

According to a fifth aspect, a computer-readable storage medium is provided. The computer-readable storage medium stores instructions, and when the instructions are run on a computer, the computer is enabled to perform the terminated call method for a terminal device according to the first aspect.

According to a sixth aspect, a computer program product including instructions is provided. When the computer program product runs on a computer, the computer is enabled to perform the terminated call method for a terminal device according to the first aspect.

According to a seventh aspect, a chip system is provided, including at least one processor and a communication interface. The at least one processor may include a processor such as an application processor or a satellite processor. The communication interface is interconnected to the at least one processor through a line, and the at least one processor is configured to run a computer program or instructions. When the computer program or the instructions are run on a computer, the computer is enabled to perform the terminated call method for a terminal device according to the first aspect.

Technical effects achieved in the second aspect, the third aspect, the fourth aspect, the fifth aspect, the sixth aspect, and the seventh aspect are similar to the technical effects achieved by corresponding technical means in the first aspect. Details are not described herein again.

### BRIEF DESCRIPTION OF DRAWINGS

FIG. 1 is a schematic diagram of a network architecture according to an embodiment of this application;
FIG. 2 is a schematic diagram of a structure of a terminal device according to an embodiment of this application;
FIG. 3 is a block diagram of a software architecture of a terminal device according to an embodiment of this application;
FIG. 4 is a block diagram of a software architecture of another terminal device according to an embodiment of this application;
FIG. 5A to FIG. 5F are a schematic diagram of an application scenario according to an embodiment of this application;
FIG. 6 is a schematic diagram of a process in which a terminal device responds to a paging message according to an embodiment of this application;
FIG. 7A to FIG. 7G are a schematic diagram of an application scenario according to an embodiment of this application;
FIG. 8A to FIG. 8I are a schematic diagram of an application scenario according to an embodiment of this application;
FIG. 9A to FIG. 9H are a schematic diagram of an application scenario according to an embodiment of this application;
FIG. 10 is a schematic flowchart of a terminated call method for a terminal device according to an embodiment of this application;
FIG. 11 is a schematic flowchart of another terminated call method for a terminal device according to an embodiment of this application;
FIG. 12 is a schematic flowchart of another terminated call method for a terminal device according to an embodiment of this application;
FIG. 13 is a schematic flowchart of another terminated call method for a terminal device according to an embodiment of this application;
FIG. 14 is a schematic flowchart of another terminated call method for a terminal device according to an embodiment of this application;
FIG. 15 is a schematic flowchart of another terminated call method for a terminal device according to an embodiment of this application; and
FIG. 16 is a schematic flowchart of another terminated call method for a terminal device according to an embodiment of this application.

### DESCRIPTION OF EMBODIMENTS

To make the objectives, technical solutions, and advantages of this application clearer, the following further describes implementations of this application in detail with reference to the accompanying drawings.

It should be understood that "a plurality of" mentioned in this application means two or more. In the descriptions of this application, unless otherwise stated, "/" means "or". For example, A/B may indicate A or B. The term "and/or" in this specification is merely an association relationship for describing associated objects, and indicates that three relationships may exist. For example, "A and/or B" may indicate the following three cases: Only A exists, both A and B exist, and only B exists. In addition, to clearly describe technical solutions of this application, words such as "first" and "second" are used to distinguish between same items or similar items with basically the same functions and effects. A person skilled in the art can understand that the words such as "first" and "second" do not limit a quantity or an execution sequence, and the words such as "first" and "second" do not define a definite difference.

Referring to "one embodiment", "some embodiments", or the like that is described in this specification of this application means that specific features, structures, or characteristics described with reference to one or more embodiments of this application are included in the one or more embodiments. Therefore, statements such as "in one embodiment", "in some embodiments", or "in some other embodiments" that appear in different parts of this application do not necessarily refer to same embodiments, but mean "one or more but not all embodiments" unless otherwise specifically emphasized in another manner. The terms "include", "comprise", "have", and variants thereof all mean "include but are not limited to", unless otherwise specifically emphasized in another manner.

Before the terminated call method for a terminal device provided in embodiments of this application is described in detail, the terminal device in the embodiments of this application is first described.

In an example, the method may be applied to a terminal device 100 that can communicate with a base station, a micro base station, or a satellite. By way of example and not limitation, the terminal device 100 may be referred to as user equipment (UE), and the terminal device 100 may be but is not limited to a tablet computer, a desktop computer, a laptop computer, a handheld computer, a notebook computer, a vehicle-mounted device, an ultra-mobile personal computer (ultra-mobile personal computer, UMPC), a netbook, a personal digital assistant (personal digital assistant, PDA), a mobile phone, a smartwatch, a smart wearable device, or the like. This is not limited in the embodiments of this application.

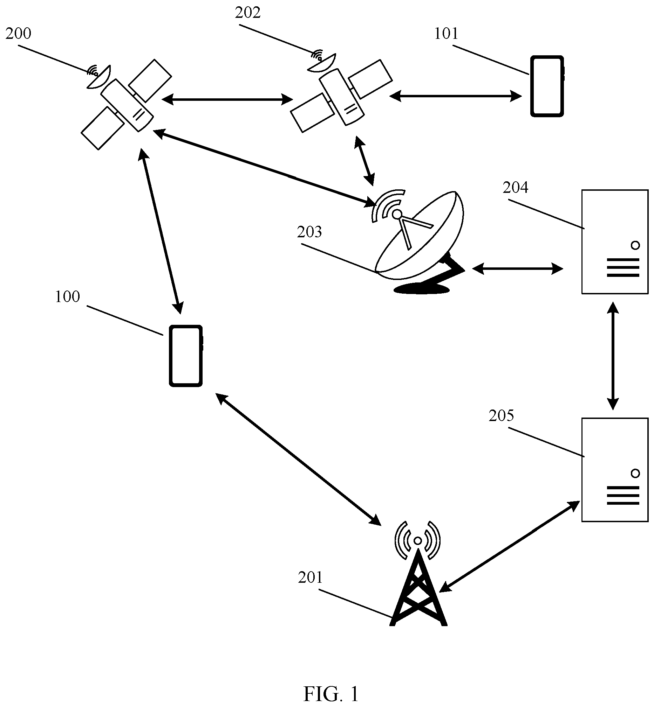

FIG. 1 is a schematic diagram of a network architecture according to an embodiment of this application. Referring to FIG. 1, the terminal device 100 may be directly communicatively connected to any satellite 200, and the terminal device 100 may be further connected to a base station 201 of an operator to which the terminal device 100 belongs. Satellites may also be communicatively connected to each other. As shown in FIG. 1, the satellite 200 may be communicatively connected to another satellite 202, and the another satellite 202 may also be communicatively connected to another terminal device 101. Both the satellite 200 and the another satellite 202 may be communicatively connected to a gateway 203, the gateway 203 may be communicatively connected to a gateway server 204, the gateway server 204 may be connected to an operator server 205, and the operator server 205 may be connected to the base station 201.

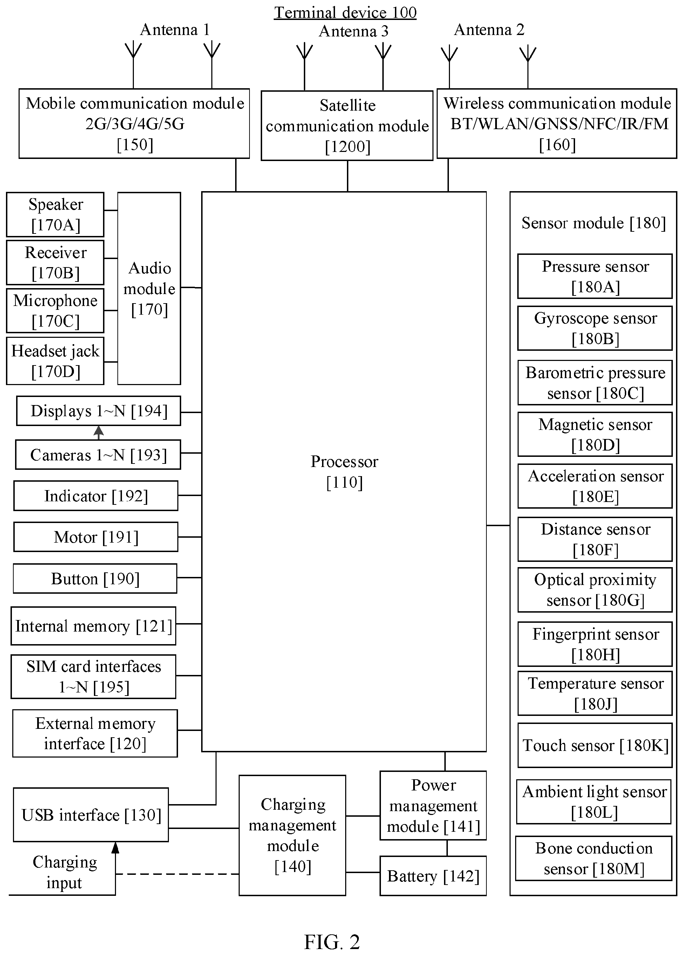

FIG. 2 is a schematic diagram of a structure of a terminal device according to an embodiment of this application. Referring to FIG. 2, the terminal device 100 may include a processor 110, an external memory interface 120, an internal memory 121, a universal serial bus (universal serial bus, USB) interface 130, a charging management module 140, a power management module 141, a battery 142, an antenna 1, an antenna 2, an antenna 3, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure illustrated in this embodiment of this application does not constitute a specific limitation on the terminal device 100. In some other embodiments of this application, the terminal device 100 may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a satellite processor (which is also referred to as a satellite baseband or a satellite communication chip), a modem processor (Modem), a graphics processing unit (graphics processing unit, GPU), an image signal processor (image signal processor, ISP), a controller, a memory, a video codec, a digital signal processor (digital signal processor, DSP), a neural-network processing unit (neural-network processing unit, NPU), and/or the like. Different processing units may be independent devices, or may be integrated into one or more processors.

The controller may be a nerve center and a command center of the terminal device 100. The controller may generate an operation control signal based on instruction operation code and a timing signal, to complete control of instruction fetching and instruction execution.

A memory may be further disposed in the processor 110 to store instructions and data. In some embodiments, the memory in the processor 110 is a cache. The memory may store instructions or data recently used or cyclically used by the processor 110. If the processor 110 needs to use the instructions or the data again, the processor 110 may directly invoke the instructions or the data from the memory. This avoids repeated access and reduces waiting time of the processor 110, thereby improving system efficiency.

In some embodiments, the processor 110 may include one or more interfaces, for example, may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It may be understood that an interface connection relationship between the modules shown in this embodiment of this application is merely an example for description, and does not constitute a limitation on the structure of the terminal device 100. In some other embodiments of this application, the terminal device 100 may alternatively use an interface connection manner different from that in the foregoing embodiment, or use a combination of a plurality of interface connection manners.

A wireless communication function of the terminal device 100 may be implemented by using the antenna 1, the antenna 2, the antenna 3, the mobile communication module 150, the wireless communication module 160, a satellite communication module 1200, the satellite processor, the modem processor, the baseband processor, and the like.

The antenna 1 and the antenna 2 are configured to transmit and receive electromagnetic wave signals. Each antenna in the terminal device 100 may be configured to cover one or more communication bands. Different antennas may be further reused to improve antenna utilization. For example, the antenna 1 may be reused as a diversity antenna of a wireless local area network. In some other embodiments, the antenna may be used together with a tuning switch.

The mobile communication module 150 may provide a solution for wireless communication that is applied to the terminal device 100 and that includes 2G/3G/4G/5G and the like. The mobile communication module 150 may include at least one filter, switch, power amplifier, low noise amplifier (low noise amplifier, LNA), and the like. The mobile communication module 150 may receive an electromagnetic wave by using the antenna 1, perform processing such as filtering and amplification on the received electromagnetic wave, and transmit a processed electromagnetic wave to the modem processor for demodulation. The mobile communication module 150 may further amplify a signal obtained after modulation by the modem processor, and convert an amplified signal into an electromagnetic wave for radiation through the antenna 1. In some embodiments, at least some functional modules in the mobile communication module 150 may be disposed in the processor 110. In some embodiments, at least some functional modules in the mobile communication module 150 may be disposed in a same device as at least some modules in the processor 110.

The modem processor may include a modulator and a demodulator. The modulator is configured to modulate a to-be-sent low frequency baseband signal into a medium or high frequency signal. The demodulator is configured to demodulate a received electromagnetic wave signal into a low frequency baseband signal. Then, the demodulator transfers, to the baseband processor for processing, the low frequency baseband signal obtained through demodulation. The low frequency baseband signal is processed by the baseband processor and then transferred to the application processor. The application processor outputs a sound signal through an audio device (not limited to the speaker 170A, the receiver 170B, or the like), or displays an image or a video through the display 194. In some embodiments, the modem processor may be an independent device. In some other embodiments, the modem processor may be independent of the processor 110 and disposed in a same device as the mobile communication module 150 or another functional module.

The wireless communication module 160 may provide a wireless communication solution that is applied to the terminal device 100 and that includes a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), near field communication (near field communication, NFC), infrared (infrared, IR), and the like. The wireless communication module 160 may be one or more devices integrating at least one communication processing module. The wireless communication module 160 receives an electromagnetic wave by using the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the to-be-sent signal, and convert the to-be-sent signal into an electromagnetic wave for radiation through the antenna 2.

The satellite processor may be used for satellite network search and access. The satellite processor is configured to process a received satellite signal and then transmit a processed satellite signal to the satellite communication module 1200 for processing. The satellite signal is transmitted to the application processor after being processed by the satellite communication module 1200. The satellite communication module 1200 may further receive a communication signal transmitted by the application processor, process the communication signal, and then send a processed communication signal to the satellite processor. The satellite processor may transmit the processed communication signal through an antenna. In some embodiments, the satellite processor may be an independent device. In some other embodiments, the satellite processor may further be independent of the processor 110, and is disposed in a same device as another functional module. This is not specifically limited in this embodiment of this application.

In some embodiments, in the terminal device 100, the antenna 1 is coupled to the mobile communication module 150, and the antenna 2 is coupled to the wireless communication module 160, so that the terminal device 100 can communicate with a network and another device according to a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), and/or a satellite based augmentation system (satellite based augmentation systems, SBAS).

Next, a software system of the terminal device 100 is described.

The software system of the terminal device 100 may use a layered architecture, an event-driven architecture, a microkernel architecture, a micro-service architecture, or a cloud architecture. In this embodiment of this application, an Android (Android) system with a layered architecture is used as an example to describe the software system of the terminal device 100.

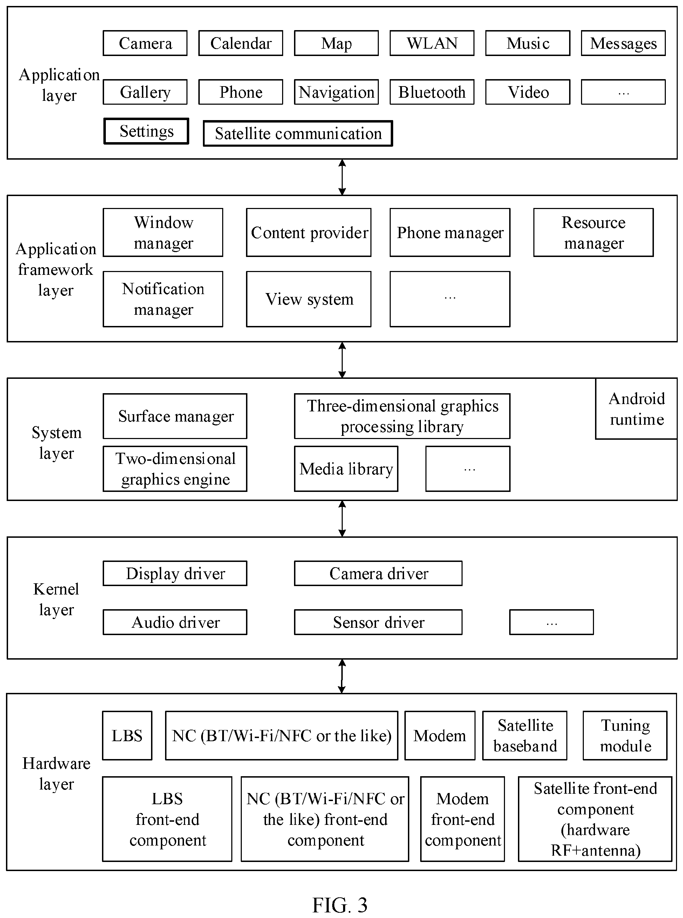

FIG. 3 is a block diagram of a software system of the terminal device 100 according to an embodiment of this application. Referring to FIG. 3, in the layered architecture, software is divided into several layers, and each layer has a clear role and task. Layers communicate with each other through a software interface. In some embodiments, the Android system is divided into four layers, which are respectively an application layer, an application framework layer, an Android runtime (Android runtime) and system library, and a kernel layer from top to bottom.

The application layer may include a series of application packages. As shown in FIG. 3, the application packages may include applications such as Camera, Gallery, Calendar, Phone, Map, Navigation, WLAN, Bluetooth, Messages, Video, Music, Settings, and Satellite communication.

In some embodiments, a user may enable a satellite communication function of the terminal device by using a setting application or a satellite communication application. In addition, the user may perform a satellite pointing operation by using the satellite communication application, that is, the terminal device may display a preset interface by using the satellite communication application. The preset interface may be one or more interfaces, and each interface in the preset interface may be referred to as a satellite pointing interface. Certainly, in some embodiments, the terminal device may alternatively enable the satellite communication function in another manner, and display the preset interface in another manner.

The application framework layer provides an application programming interface (application programming interface, API) and a programming framework for the applications at the application layer. The application framework layer includes some predefined functions. As shown in FIG. 3, the application framework layer may include a window manager, a content provider, a view system, a phone manager, a resource manager, a notification manager, and the like. The window manager is configured to manage a window program.

The window manager may obtain a size of the display, determine whether there is a status bar, lock a screen, take a screenshot, and the like. The content provider is configured to store and obtain data and make the data accessible to an application. The data may include a video, an image, audio, calls that are made and answered, a browsing history and bookmarks, a phone book, and the like. The view system includes visual controls such as a text display control and a picture display control. The view system may be configured to construct a display interface of an application. The display interface may include one or more views, for example, include a view for displaying an SMS message notification icon, include a view for displaying a text, and include a view for displaying a picture. The phone manager is configured to provide a communication function of the terminal device 100, for example, management of a call status (including answering, declining, or the like). The resource manager provides various resources such as a localized character string, an icon, a picture, a layout file, and a video file for an application. The notification manager enables an application to display notification information in the status bar, and the notification information may be used to convey a notification-type message and may automatically disappear after a short stay without user interaction. For example, the notification manager is configured to provide a notification of download completion, a message reminder, and the like. The notification manager may alternatively be a notification that appears in a top status bar of the system in a form of a graph or a scroll bar text, for example, a notification of an application running in the background. The notification manager may alternatively be a notification that appears on a screen in a form of a dialog window. For example, text information is prompted in the status bar, an alert tone is made, the electronic device vibrates, or an indicator blinks.

The Android runtime includes a core library and a virtual machine. The Android runtime is responsible for scheduling and management of an Android system. The core library includes two parts: One part is a functional function that needs to be invoked in a java language, and the other part is an Android core library. The application layer and the application framework layer run in the virtual machine. The virtual machine executes java files at the application layer and the application framework layer as binary files. The virtual machine is configured to perform functions such as object lifecycle management, stack management, thread management, security and abnormality management, and garbage collection.

The system library may include a plurality of functional modules, for example, a surface manager (surface manager), a media library (Media Libraries), a three-dimensional graphics processing library (for example, OpenGL ES), and a 2D graphics engine (for example, SGL).

The surface manager is configured to manage a display subsystem, and provide fusion of 2D and 3D layers for a plurality of applications. The media library supports playback and recording in a plurality of common audio and video formats, a still image file, and the like. The media library may support a plurality of audio and video coding formats, for example, MPEG4, H.264, MP3, AAC, AMR, JPG, and PNG. The three-dimensional graphics processing library is configured to implement three-dimensional graphics drawing, image rendering and composition, layer processing, and the like. The 2D graphics engine is a drawing engine for 2D graphics drawing.

The kernel layer is a layer between hardware and software. The kernel layer includes at least a display driver, a camera driver, an audio driver, and a sensor driver.

The hardware layer may include a tuning module, a location based service (location based service, LBS), near communication (near communication, NC), a modem (modem, also referred to as a cellular baseband), a satellite baseband (also referred to as a satellite communication chip), an LBS front-end component, an NC front-end component, a modem front-end component, and a satellite front-end component. The NC includes BT, Wi-Fi, NFC, and the like.

In an example, when the electronic device is in a coverage area of a cellular network, the electronic device may enable the modem to perform cellular network search to access the cellular network. When there is no cellular network coverage or cellular signal quality is poor in an area in which the electronic device is located, the electronic device may enable the satellite communication module to access a satellite network by using the satellite communication module, and disable the modem, Wi-Fi, BT, NFC, and IR, to reduce interference of other signal sending and receiving to satellite signal sending and receiving, thereby improving satellite signal sending and receiving quality. In some implementations, the LBS module of the electronic device is enabled by default. The LBS module is disabled only when the user operates the electronic device to disable a positioning service. A satellite pointing operation needs to be performed when the electronic device performs satellite communication in the satellite network, and the satellite pointing operation needs positioning information of the electronic device. Therefore, when the electronic device accesses the satellite network, the LBS module is controlled to be in an enabled state. In some implementations, when the electronic device is disconnected from the satellite network, the LBS module may maintain the enabled state.

The following describes example working procedures of software and hardware of the terminal device 100 with reference to a capturing and photographing scenario.

When the touch sensor 180K receives a touch operation, a corresponding hardware interrupt is sent to the kernel layer. The kernel layer processes the touch operation into an original input event (including information such as touch coordinates and a timestamp of the touch operation). The original input event is stored at the kernel layer. The application framework layer obtains the original input event from the kernel layer, and recognizes a control corresponding to the original input event. For example, the touch operation is a single-tap operation, and a control corresponding to the single-tap operation is a control of a camera application icon. A camera application invokes an interface at the application framework layer to start the camera application, and then invokes the kernel layer to start the camera driver, and the camera 193 captures a still image or a video.

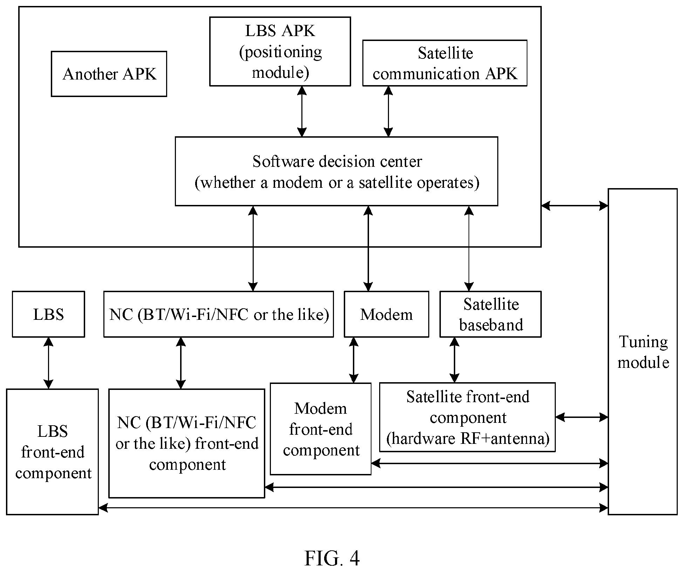

In some embodiments, referring to FIG. 4, the application framework layer may include not only the foregoing modules, but also another module. For example, the application framework layer may further include an LBS application package (Android application package, APK) (the LBS APK may include a positioning module), a satellite communication APK, a software decision center, and another APK. The software decision center is configured to determine whether the modem or the satellite operates. In other words, the software decision center may determine a communication mode used currently, for example, determine that a cellular network communication mode is used currently, determine that a satellite communication mode is used currently, or determine that a combination mode of a satellite communication mode and a cellular network communication mode is used currently.

The LBS front-end component at the hardware layer may communicate with the LBS and the tuning module. The satellite front-end component may communicate with the satellite baseband and the tuning module. The modem front-end component may communicate with the corresponding cellular baseband and the tuning module. The NC front-end component may communicate with the NC and the tuning module.

In some embodiments, each front-end component in the NC front-end component, the LBS front-end component, the modem front-end component, the satellite front-end component, and the like may include a filter, a power amplifier, a low noise amplifier, a switch (also referred to as a tuning switch), an antenna, and the like. The antenna may be configured to receive/transmit at least one type of signal (or referred to as a message, an electromagnetic wave, or the like). The filter is configured to filter a signal received by the antenna, and the low noise amplifier is configured to perform amplification processing on a signal received/transmitted by the antenna. The switch is configured to enable or disable a receiving mode of a corresponding antenna. The front-end component in FIG. 3 may be understood as a related communication module in FIG. 2, and the satellite front-end component in FIG. 3 may be understood as the satellite communication module shown in FIG. 2.

In some embodiments, the tuning module may further communicate with the foregoing software decision center, and complete tuning on at least one antenna under the control of the software decision center and under the action of a tuning switch in each front-end component.

It should be noted that the software architecture provided in this application is an example, and constitutes no limitation on the embodiments of this application.

Application scenarios in the embodiments of this application are described below by using examples.

In some scenarios, more terminal devices are configured with a satellite communication mode. For a terminal device configured with a satellite communication mode, if an emergency occurs, the terminal device may perform emergency connection in the satellite communication mode, to implement communication. Currently, a satellite has high receiving sensitivity and high transmit power, and the satellite and the terminal device are affected by a limited ID design and antenna performance. Generally, the terminal device needs to perform a satellite pointing operation to improve connection sensitivity with the satellite.

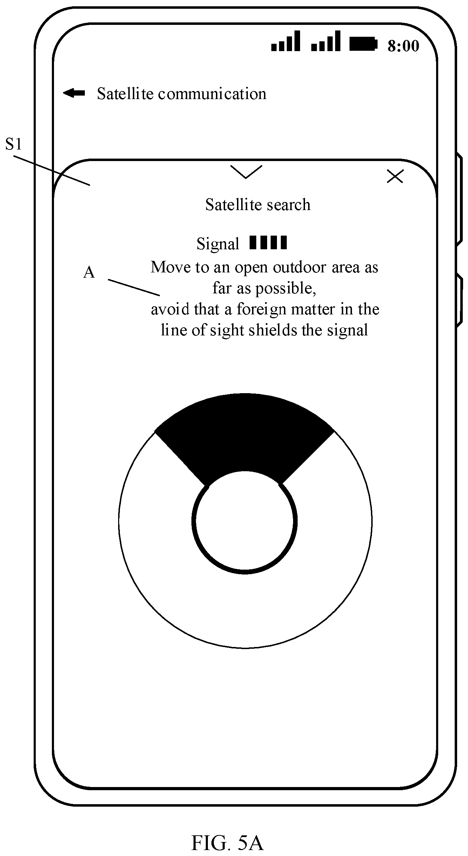

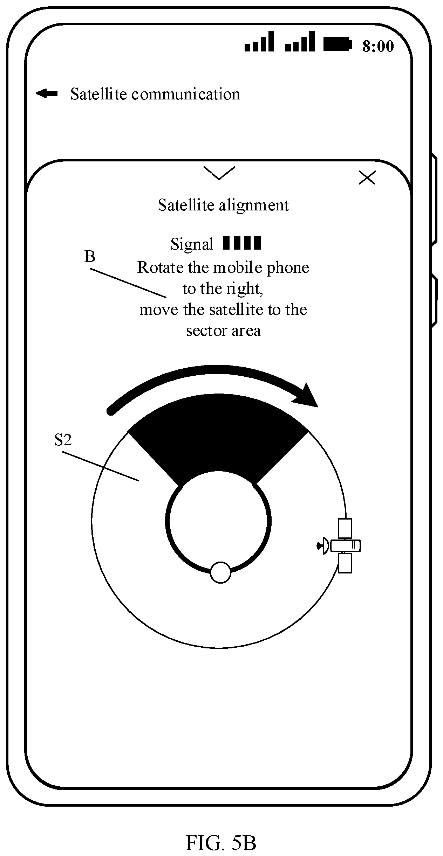

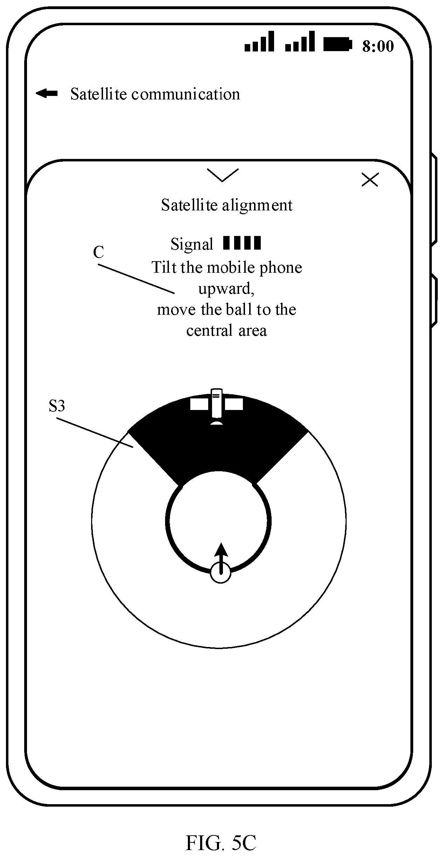

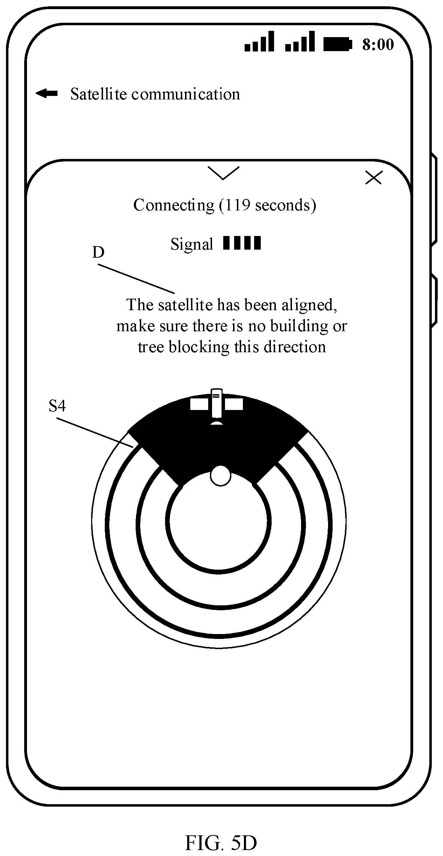

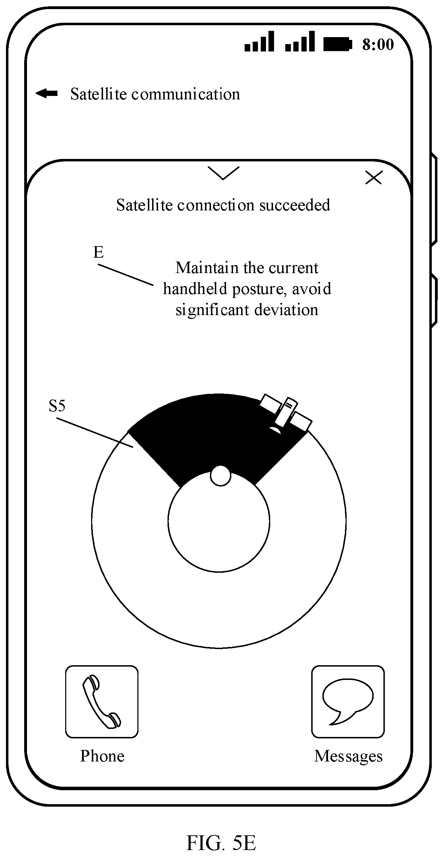

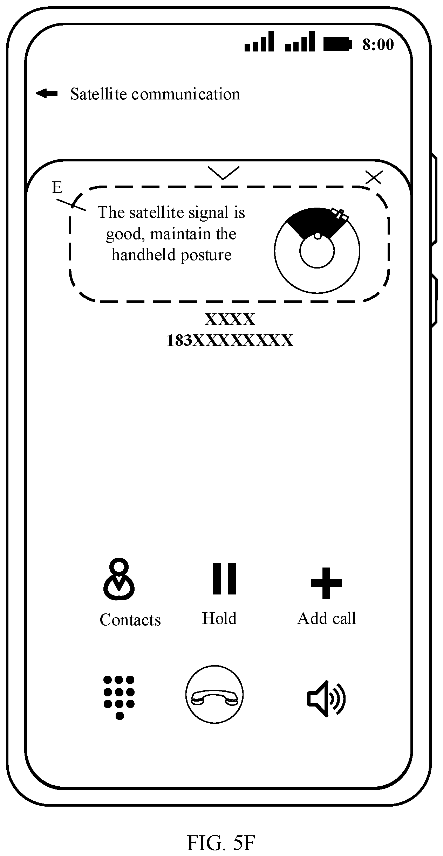

Currently, the terminal device mainly initiates a service actively. Even if the terminal device wants to receive a message such as a terminated call (MT, Mobile Termination Call, terminated call) or an SMS message from the satellite, there is a process of actively searching for the satellite, that is, the terminal device needs to perform a satellite pointing operation. For example, referring to FIG. 5A, when the terminal device is a mobile phone, if a user wants to initiate a service or wants to receive a message such as a terminated call from the satellite, the user may trigger the mobile phone to display a satellite pointing interface S1. The satellite pointing interface S1 may display prompt information A. The prompt information A is used to prompt the user that a satellite search operation is being performed currently, that is, the mobile phone is searching for a satellite signal, and the prompt information A may be "Move to an open outdoor area as far as possible, avoid that a foreign matter in the line of sight shields the signal". When a satellite signal is found, referring to FIG. 5B, prompt information B and first graphical information S2 may be displayed in the satellite pointing interface S1. The prompt information B is used to prompt the user to rotate the mobile phone according to a requirement, to perform elevation angle alignment. For example, "Rotate the mobile phone to the right, move the satellite to the sector area" is displayed. Based on the prompt of the prompt information B and the first graphical information S2, the user may rotate the mobile phone to perform elevation angle alignment. After elevation angle alignment, referring to FIG. 5C, the mobile phone may continue to display prompt information C and second graphical information S3 in the satellite pointing interface S1. The prompt information C is used to prompt the user to continue to change a tilt angle of the terminal device according to a requirement, to perform azimuth angle alignment. For example, the prompt information C may be "Tilt the mobile phone upward, move the ball to the central area". Based on the prompt of the prompt information C and the second graphical information S3, the user may tilt the mobile phone to perform azimuth angle alignment. After azimuth angle alignment, referring to FIG. 5D, the mobile phone may attempt to connect to the satellite, and display prompt information D and third graphical information S4 in a connection process. The prompt information D is used to prompt the user that the mobile phone is requesting to connect to the satellite, and the prompt information D may be "The satellite has been aligned, make sure there is no building or tree blocking this direction". When the connection succeeds, referring to FIG. 5E, prompt information E and fourth graphical information S5 may be displayed in the satellite pointing interface S1. The prompt information E may prompt the user to perform satellite communication, and avoid moving the mobile phone. The prompt information E may be "Maintain the current handheld posture, avoid significant deviation". After the connection between the mobile phone and the satellite is established, the mobile phone may implement a service such as a call or an SMS message by using the satellite. Referring to FIG. 5F, the mobile phone may actively perform a call service, and in a process of performing the call service, prompt information F and fifth graphical information S6 may be displayed in an interface of the call service. The prompt information F may prompt the user to avoid moving the mobile phone in a process of performing the service, and the prompt information F may be "The satellite signal is good, maintain the handheld posture". When the terminal device successfully completes the satellite pointing operation, the terminal device may implement satellite communication. That is, the terminal device establishes a link to the satellite. After the link is established, in the satellite pointing interface shown in FIG. 5E, when receiving the paging message, the terminal device sends, to the satellite by using the established link, a message for responding to the paging message, that is, successfully sends a response message to the satellite. In this way, the terminal device may trigger a ring notification, and an upper layer UX in the terminal device may prompt, based on the ring notification by using a sound, an animation, or the like, the user that there is a satellite service (such as an incoming call or an SMS message).

Some satellites may add optimization of downlink specific paging signals, and a synchronization chip also improves a downlink demodulation capability by using technologies such as receive diversity & reduced coding, so that the terminal device can receive a paging message from the satellite in some scenarios. However, due to a limitation of transmit power and a limitation of an antenna capability of the terminal device, the terminal device is limited in uplink. When no satellite pointing operation is performed, the terminal device cannot determine a location of the satellite, so that an uplink message of the terminal device cannot be sent, and the terminal device cannot establish a link to the satellite. When the terminal device cannot establish a link to the satellite, after the terminal device receives a paging message from the satellite, the terminal device cannot respond to the paging message. After the terminal device fails to respond to the paging message from the satellite (that is, paging response fails and link establishment fails), the user cannot perceive occurrence of this event. Therefore, in an emergency case, an important message is missed because connection is not timely.

That is, regardless of whether the terminal device actively initiates a service or passively receives a paging signal from the satellite, the terminal device needs to perform a satellite pointing operation. If the terminal device fails to perform a satellite pointing operation when receiving the paging signal from the satellite, the terminal device may not be connected to the satellite in a timely manner, and consequently, the terminal device cannot perform or miss a satellite service (a satellite call or a satellite SMS message).

It can be learned that there are two existing user usage scenarios related to satellite communication: 1. To enter a satellite communication mode, a satellite pointing operation needs to be performed. 2. After a satellite service is exited, a satellite communication mode is exited. After exiting the satellite communication mode, the terminal device may fail to respond to a satellite call, that is, the terminal device cannot establish a connection to the satellite.

To improve timeliness of performing a satellite pointing operation by the terminal device, so as to improve timeliness of connecting to the satellite, when the terminal device receives a paging message from the satellite, if a preset interface is not displayed currently, that is, the terminal device does not display a satellite pointing interface, the terminal device may present first prompt information, where the first prompt information is used to prompt the user to perform a satellite pointing operation. When receiving the paging message from the satellite, the terminal device may present the first prompt information. In this way, the user can quickly perceive that there is a satellite paging event, to quickly enter the preset interface to perform the satellite pointing operation, thereby accelerating establishment of the connection to the satellite, ensuring that a notified service is normally performed, and improving a success rate of implementing an emergency service such as an incoming call by the satellite.

An implementation process of the embodiments of this application is preliminarily described below.

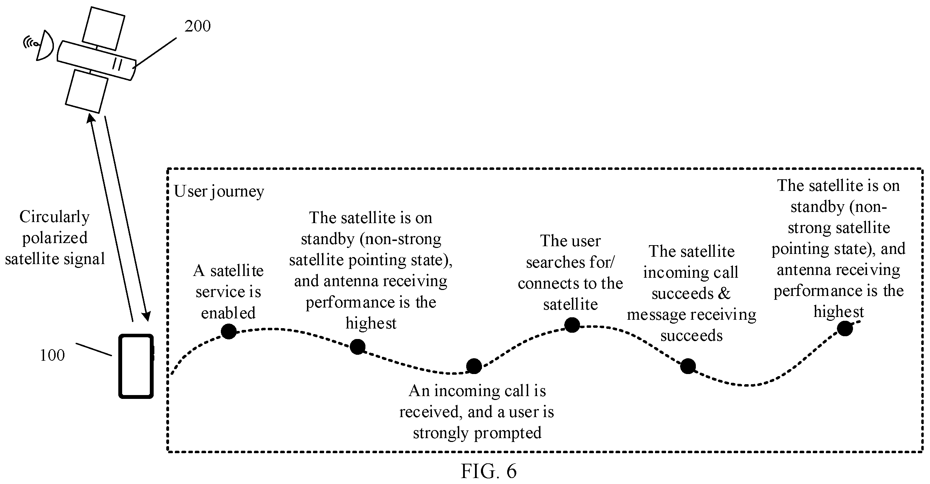

In an example of this application, referring to FIG. 6, if a satellite service of a terminal device is enabled (in other words, a satellite communication function is enabled), the terminal device is in a satellite standby state (which may be understood as a non-strong satellite pointing state, in other words, a current interface of the terminal device is a non-satellite pointing interface). In this case, the terminal device may perform an antenna tuning operation on at least one antenna. In this way, receiving performance of a tuned antenna is the highest (the highest mentioned in this specification may be a relative concept, and may be understood as higher).

In an example of this application, referring to FIG. 6, a satellite may send a paging message to the terminal device. When receiving the paging message, the terminal device may detect whether a satellite pointing interface is displayed currently. If a non-satellite pointing interface is displayed currently, that is, the satellite pointing interface is not displayed currently, the terminal device may strongly prompt a user. That is, prompt is performed by using first prompt information. Based on the prompt of the first prompt information, the user may operate the terminal device to perform a satellite pointing operation. After the terminal device is connected to the satellite, the terminal device may implement satellite communication, that is, the satellite can successfully complete an emergency service such as an incoming call or an incoming message for the terminal device. After the service is completed, the terminal device restores to the satellite standby state.

In an example, the first prompt information may be provided in at least one of a voice prompt manner, a vibration prompt manner, and an interface prompt manner. That is, when the non-satellite pointing interface is displayed currently, the terminal device may present the first prompt information in at least one of a voice prompt manner, a vibration prompt manner, and an interface prompt manner.

It should be noted that the paging message may be an incoming call message, an SMS message, or the like. That is, the paging message may carry a service such as a call/SMS/PS or carry a specific quantity of demodulation errors for the paging message. This is not specifically limited in this embodiment of this application.

In some embodiments of this application, considering that the user does not worry about power consumption and wants to remain in the satellite communication mode outdoors, a satellite communication standby mode (which may also be referred to as a satellite communication standby state or a non-satellite pointing state, such as a scenario in which the user places a mobile phone in a pocket) is added to the terminal device. When the terminal device receives a service of a satellite call or an SMS message, a modem (which may be a satellite modem, also referred to as a satellite baseband) of the terminal device notifies an AP of the service (for example, the terminal reports information to the AP when receiving an MT paging in the satellite standby mode). The AP prompts, by using an interface, the user to perform satellite pointing, to improve a success rate of sending an uplink response by the mobile phone.

To facilitate understanding of the embodiments of this application, application scenarios in the embodiments of this application are described below.

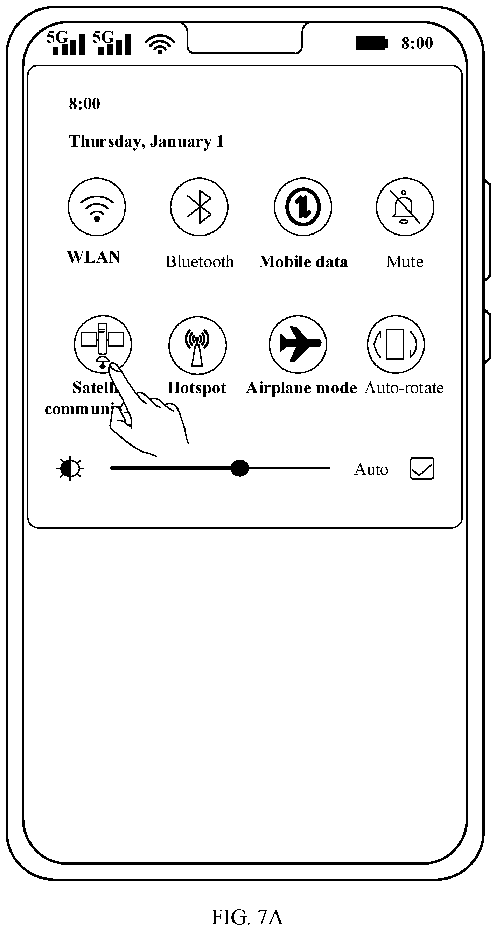

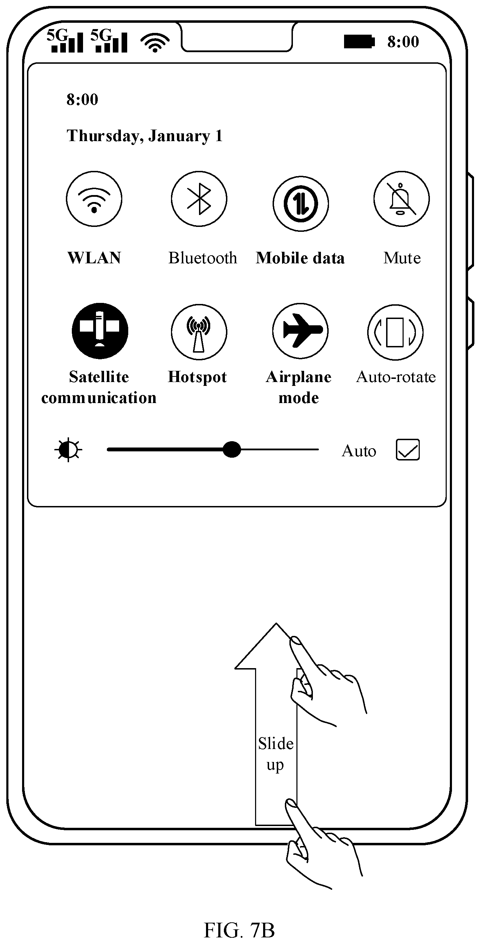

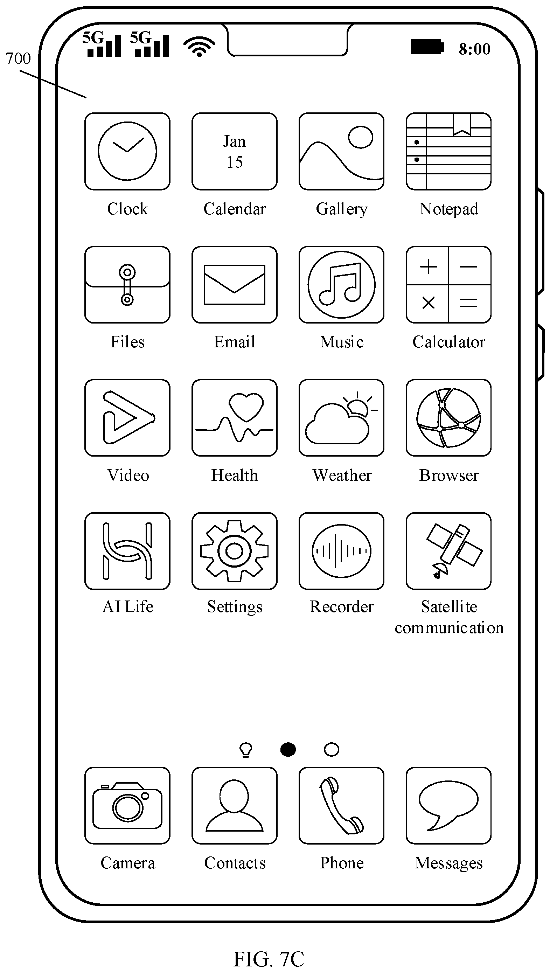

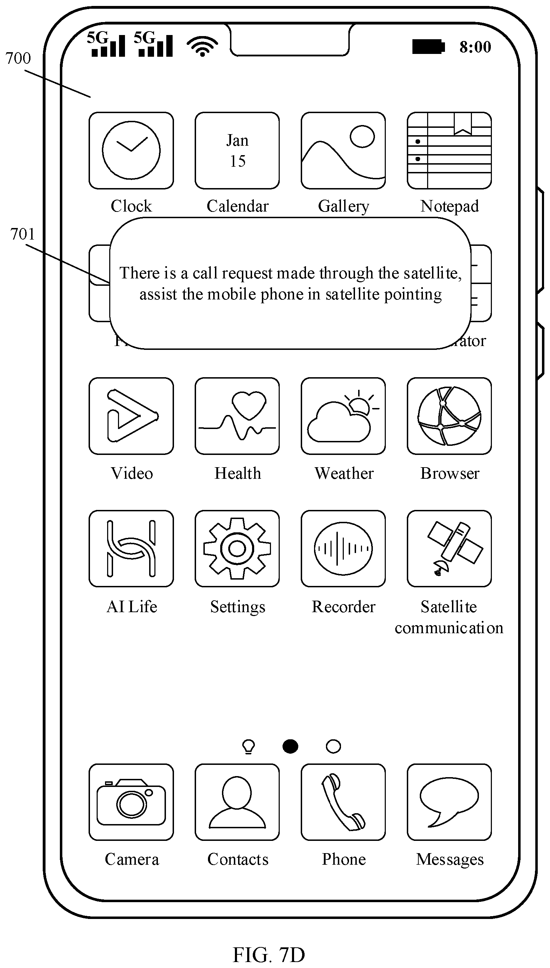

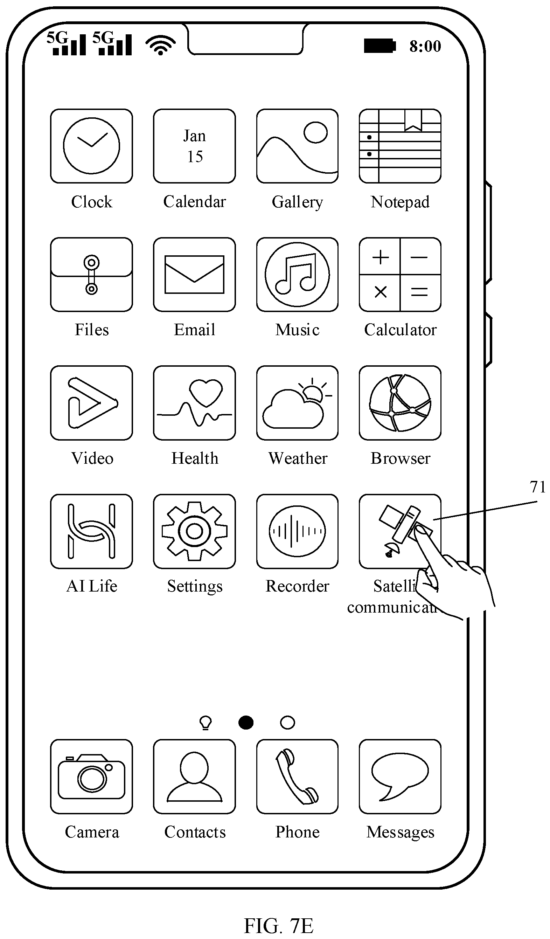

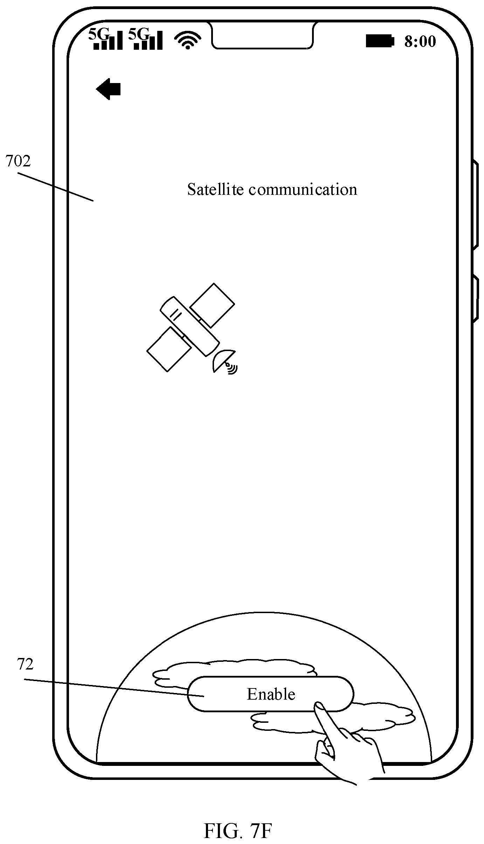

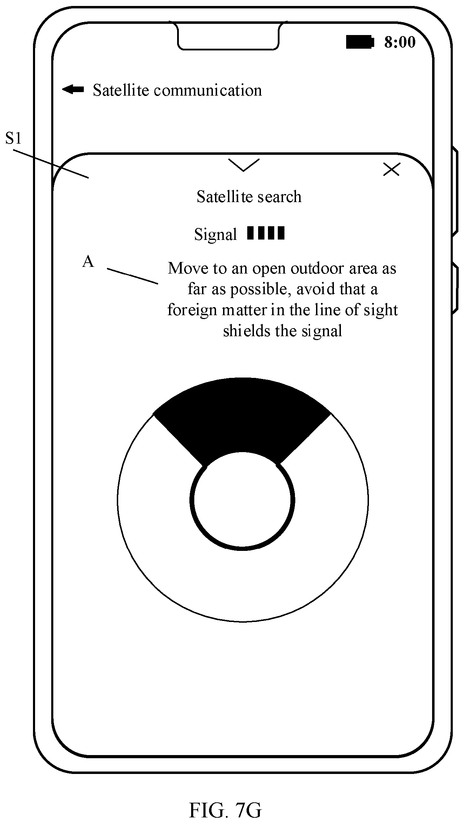

Refer to FIG. 7A to FIG. 7G. FIG. 7A to FIG. 7G are a schematic diagram of an application scenario according to an embodiment of this application. In an application scenario, in a process of using a mobile phone, a user may enable a satellite communication function of the mobile phone. For example, when the mobile phone displays a desktop 700, if the user performs an operation of pulling down a menu bar on the mobile phone, the mobile phone may display, based on the operation of the user, a pull-down menu interface 710 shown in FIG. 7A. The menu interface 710 displays a switch control 711 for a satellite communication function. The user may tap the switch control 711. In response to a tap operation on the switch control 711, the mobile phone may change a display status of the switch control 711 (as shown in FIG. 7B), and enable the satellite communication function. When the satellite communication function is enabled, the mobile phone may set at least one antenna to receive a satellite signal. That is, before the satellite communication function is enabled, if there is a paging message from a satellite, the mobile phone cannot receive the paging message from the satellite. After the satellite communication function is enabled, when there is a paging message from a satellite, the mobile phone can receive the paging message from the satellite. After enabling the satellite communication function, the user may return to the mobile phone desktop shown in FIG. 7C. In this case, if the user does not assist the mobile phone in performing a satellite pointing operation, when the mobile phone receives a paging message from the satellite in a process in which the user uses the mobile phone outdoors, referring to FIG. 7D, if the mobile phone of the user currently displays the desktop 700 of the mobile phone, the mobile phone cannot respond to the paging message. In this case, the mobile phone may display first prompt information in a form of a pop-up window 701 on the desktop of the mobile phone, for example, display "There is a call request made through the satellite, assist the mobile phone in satellite pointing". When the user learns of the first prompt information, referring to FIG. 7E, after the pop-up window 701 is closed, the user may tap an application icon 71 of a satellite communication application on the desktop. In response to a tap operation on the application icon 71 of the satellite application, referring to FIG. 7F, the mobile phone may display an application interface 702 of the satellite application. The application interface 702 displays an enable control 72. In response to a tap operation on the enable control 72, the mobile phone starts to perform the satellite pointing operation with the assistance of the user, and displays a satellite search interface S1 shown in FIG. 7G. When the mobile phone displays the satellite search interface, the mobile phone starts to perform a satellite search operation in the satellite pointing operation, that is, the mobile phone may sequentially display, with the assistance of the user, the satellite pointing interfaces (preset interfaces) shown in FIG. 5A, FIG. 5B, FIG. 5C, FIG. 5D, and FIG. 5E. If the user performs a service such as a call or an SMS message by using the mobile phone after the mobile phone establishes a connection to the satellite, the mobile phone may display the satellite pointing interface (preset interface) that is shown in FIG. 5F and that indicates to maintain a handheld posture (which may be understood as maintaining the connection to the satellite).

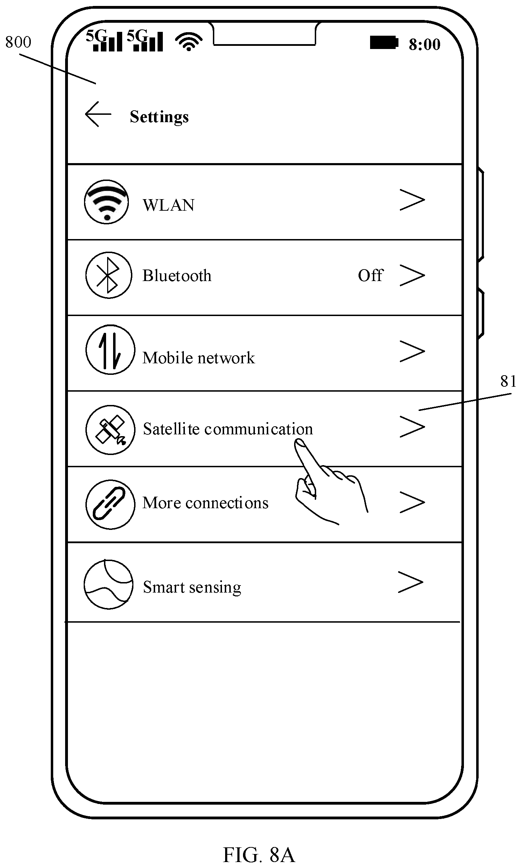

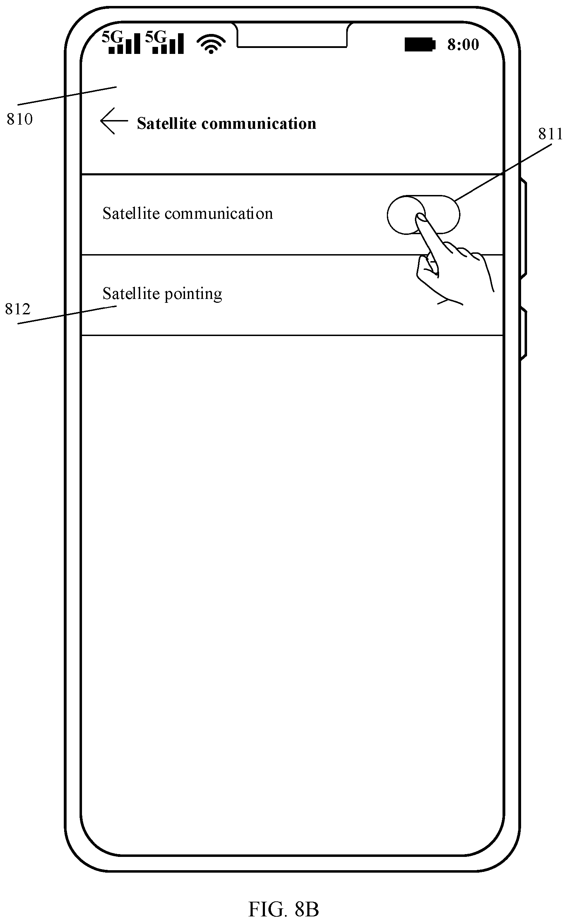

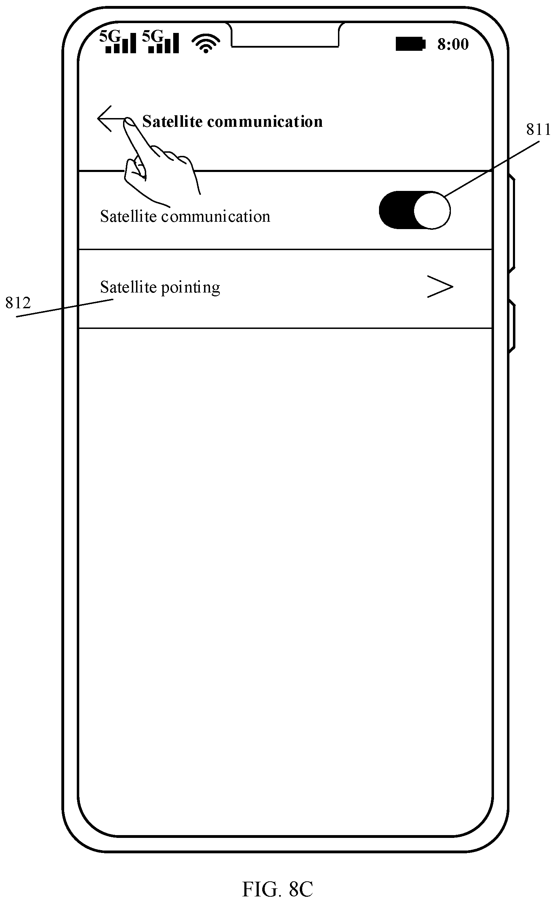

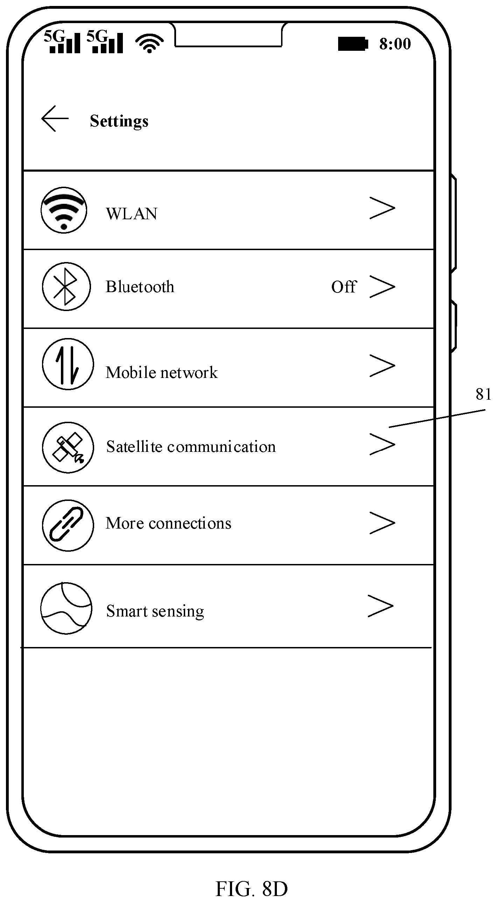

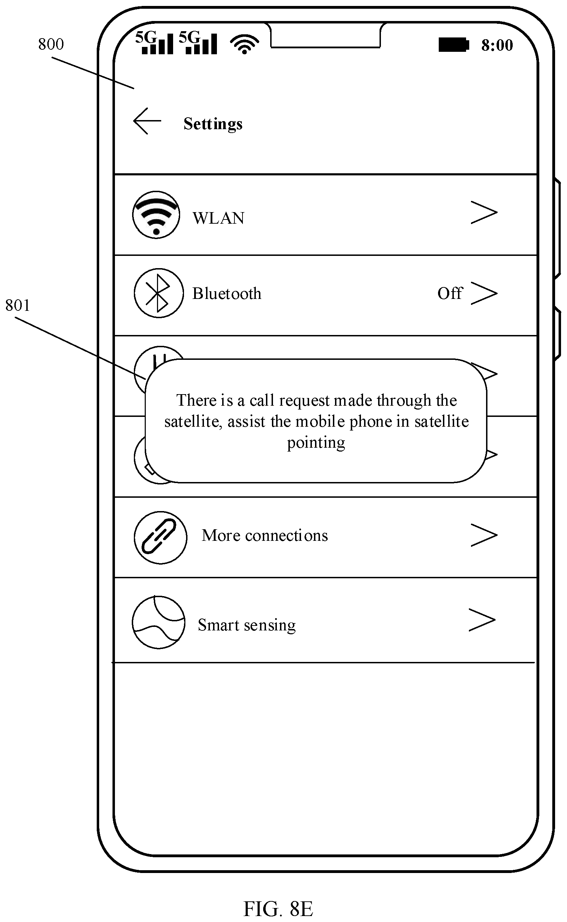

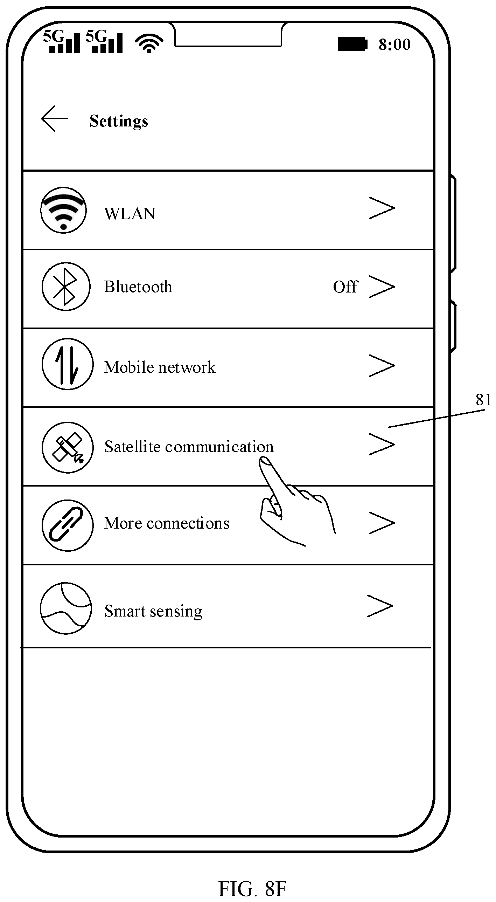

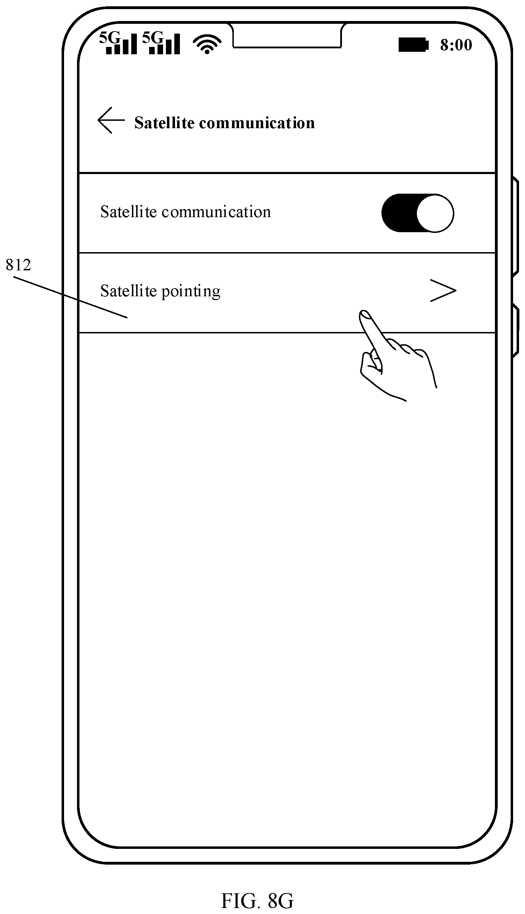

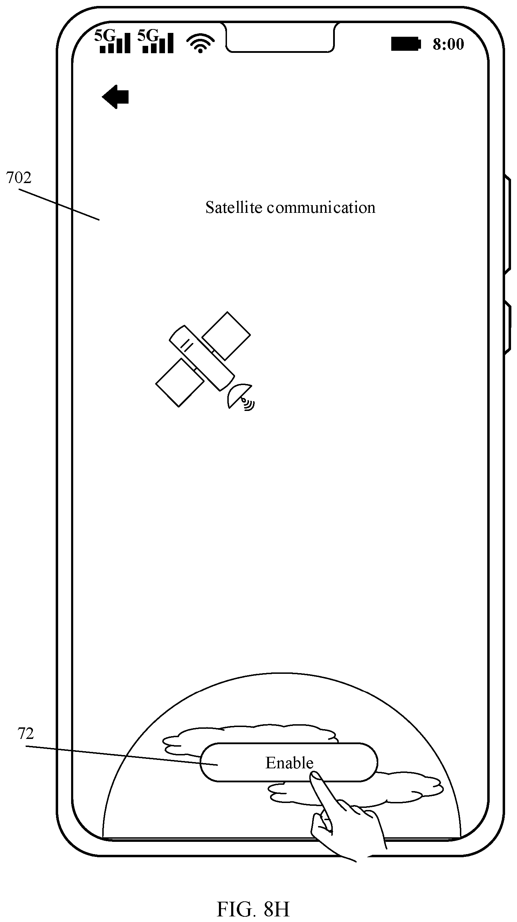

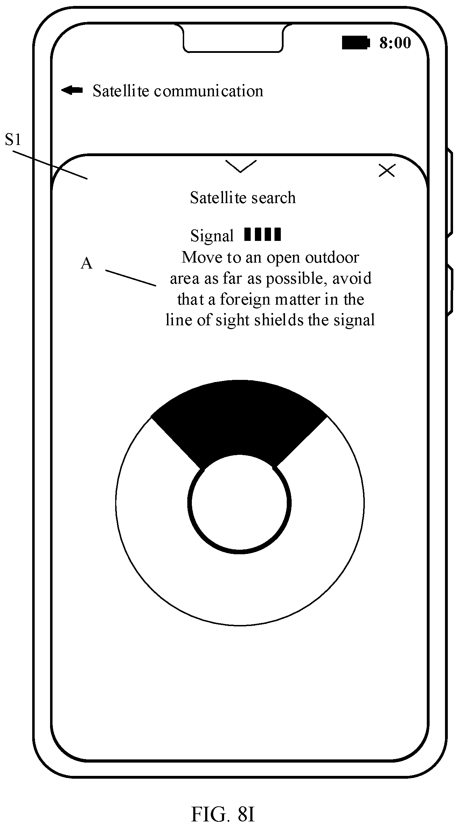

In another scenario, a user may not only enable a satellite communication function in a pull-down menu interface, but also enable the satellite communication function in another interface. Referring to FIG. 8A, a mobile phone may start a setting application based on a trigger operation of the user, and display a setting interface 800. A satellite communication option 81 is displayed in the setting interface 800, and the user may tap the satellite communication option 81. In response to a tap operation on the satellite communication option 81, a satellite function setting interface 810 shown in FIG. 8B may be displayed. The satellite function setting interface 810 displays a switch control 811 for a satellite communication function and a satellite pointing option 812. The user may tap the switch control 811. In response to a tap operation on the satellite switch control 811, the mobile phone may enable the satellite communication function and change a display status of the switch control 811 (as shown in FIG. 8C). Then, if the user temporarily does not need to implement a service by using the satellite, the mobile phone may return to the setting interface 800 or the mobile phone desktop 700 based on an operation of the user. Referring to FIG. 8D, in this embodiment of this application, an example in which the setting interface 800 is displayed is used for description. If the mobile phone receives a paging message from the satellite, the mobile phone displays the setting interface 800 of the setting application. Referring to FIG. 8E, the mobile phone may display first prompt information in a form of a pop-up window 801. The first prompt information may be "There is a call request made through the satellite, assist the mobile phone in satellite pointing". When the user learns of the first prompt information, referring to FIG. 8F, after the pop-up window 801 is closed, the user may tap the satellite communication option 81 in the setting interface 800. In response to a tap operation on the satellite communication option 81, referring to FIG. 8G, the mobile phone may display the satellite function setting interface 810, and the user may tap the satellite pointing option 812. The mobile phone responds to a tap operation on the satellite pointing option 812. Referring to FIG. 8H, the mobile phone may display an application interface 702 of the satellite application. The application interface 702 displays an enable control 72. In response to a tap operation on the enable control 72, the mobile phone starts to perform the satellite pointing operation with the assistance of the user, and displays a satellite search interface S1 shown in FIG. 8I. When the mobile phone displays the satellite search interface, the mobile phone starts to perform a satellite search operation in the satellite pointing operation, that is, the mobile phone may sequentially display, with the assistance of the user, the satellite pointing interfaces (also referred to as preset interfaces) shown in FIG. 5A, FIG. 5B, FIG. 5C, FIG. 5D, and FIG. 5E. If the user performs a service such as a call or an SMS message by using the mobile phone after the mobile phone establishes a connection to the satellite, the mobile phone may display the connection maintenance indication interface shown in FIG. 5F.

It should be noted that, after the user enables the satellite communication function of the mobile phone by using the switch control 811 in the satellite communication setting interface 810, if the user needs to perform the satellite pointing operation on the mobile phone, the user may continue to tap the satellite pointing option 812. In response to an operation on the satellite pointing option 812, the mobile phone may display the application interface 702 of the satellite application that is shown in FIG. 8H, and the user may continue to tap the enable control 71 in the application interface 702, so that the mobile phone enters a satellite search interface S1 to start performing the satellite pointing operation.

In another scenario, when the satellite communication function of the mobile phone is not enabled, that is, when the user does not tap the switch control 811, if the user directly taps the satellite pointing option 812, in response to an operation on the satellite option 812, the mobile phone may display the application interface 702 of the satellite application that is shown in FIG. 8H. If the user subsequently continues to tap the enable control 71 in the application interface 702, the mobile phone may enable the satellite communication function and enter the satellite search interface S1, to start performing the satellite pointing operation.

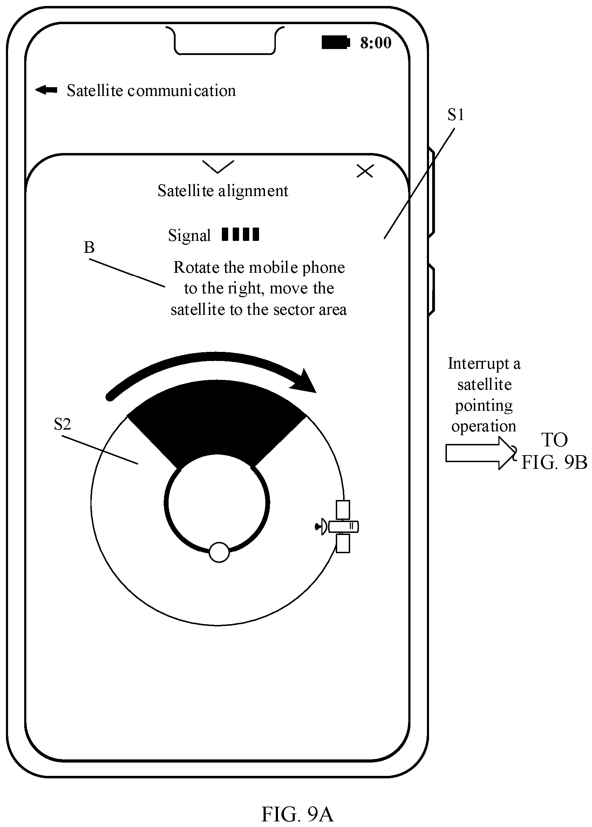

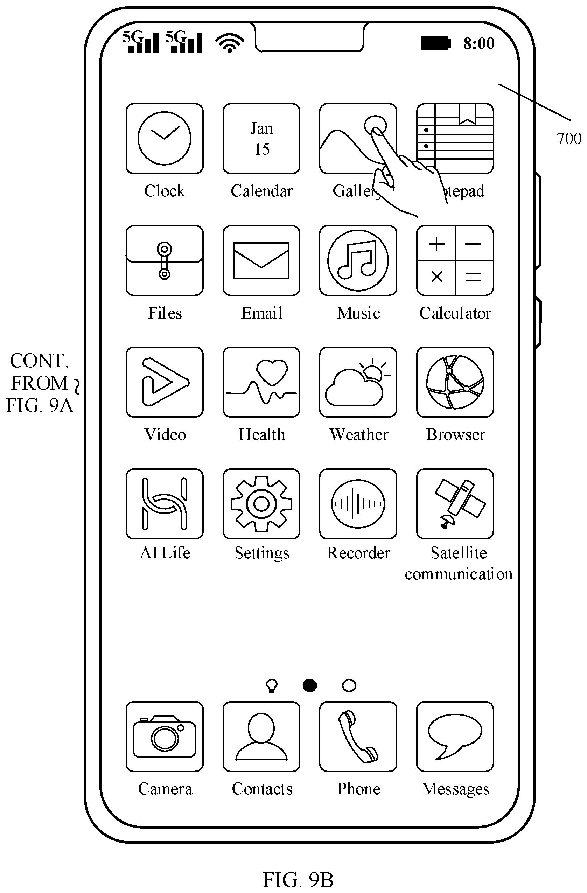

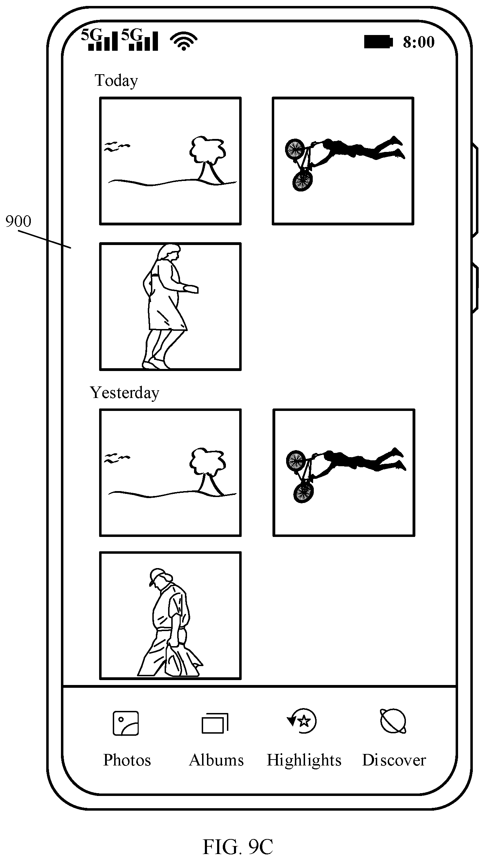

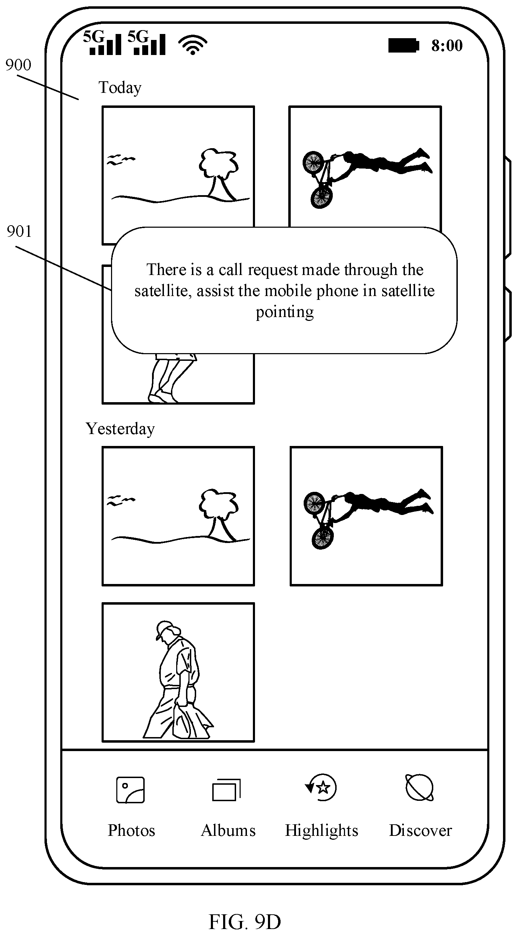

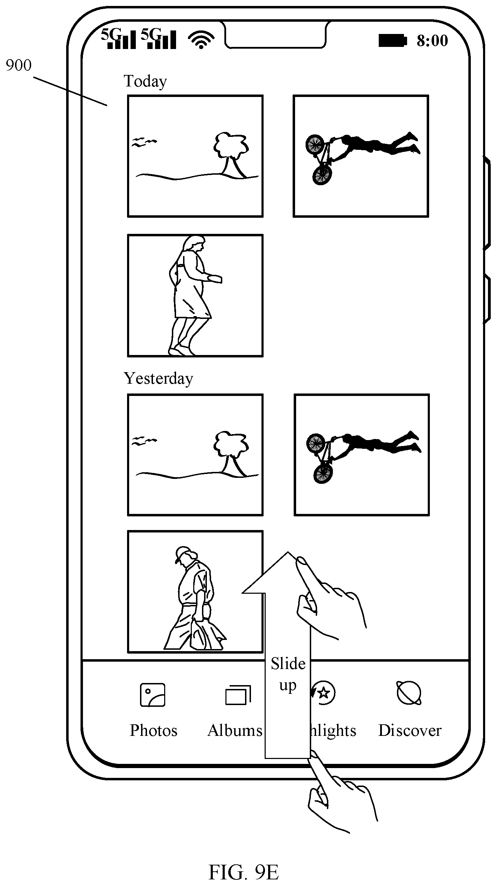

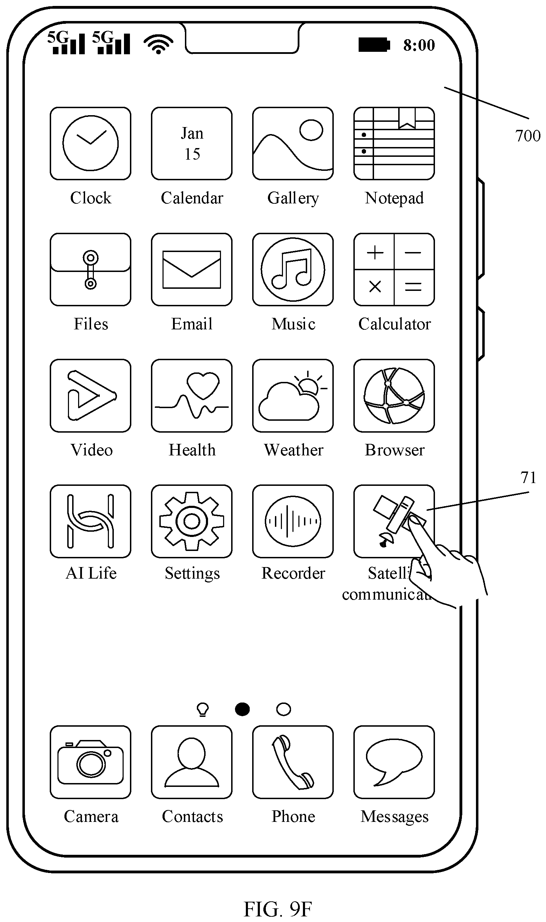

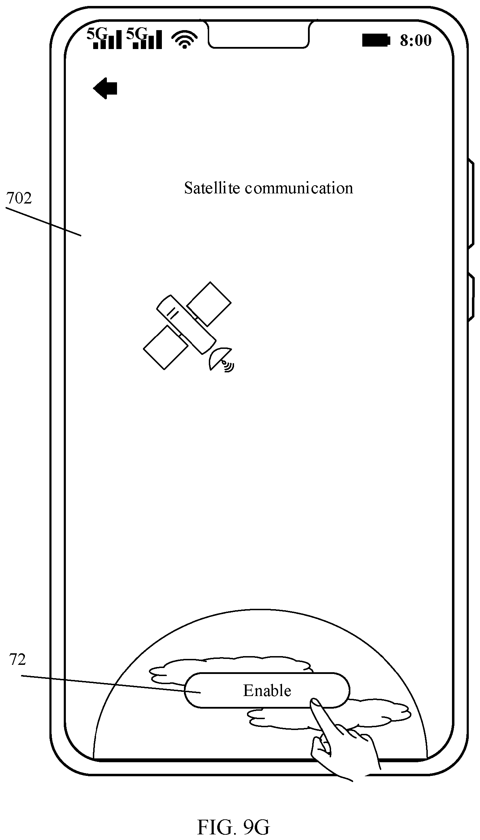

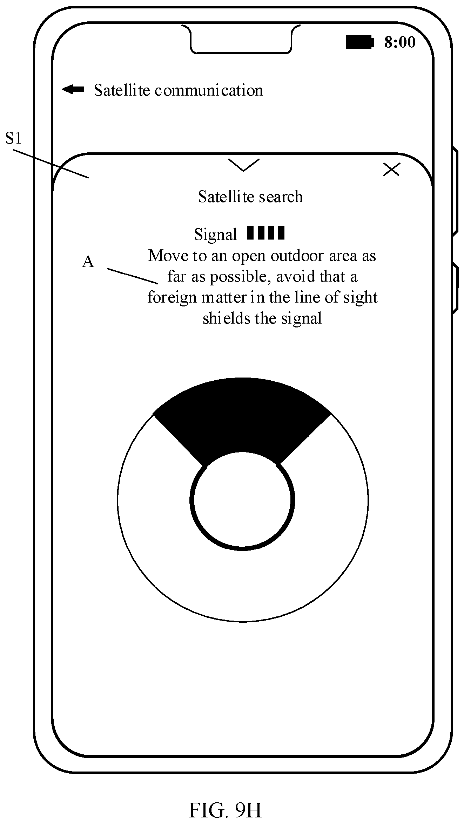

In another scenario, referring to FIG. 9A, when a mobile phone displays an interface (one of satellite pointing interfaces) S1 for indicating to perform elevation angle alignment, if a user does not need to perform a service by using a satellite, wants to use another application, and performs a trigger operation (for example, an operation of sliding upward from the bottom of the satellite pointing interface) that causes the mobile phone to exit the satellite pointing interface, the mobile phone may interrupt a satellite pointing operation and display a desktop 700 shown in FIG. 9B. The user may tap an application icon of the application that needs to be used, for example, the user may tap an application icon of a gallery application. In response to a tap operation performed by the user on the application icon of the gallery application, referring to FIG. 9C, the mobile phone may display an application interface 900 of the gallery application. When the mobile phone displays the application interface 900 of the gallery application, referring to FIG. 9D, if the mobile phone receives a paging message from the satellite, the mobile phone may display first prompt information in the application interface 900 of the gallery application in a form of a pop-up window 901. The first prompt information may be "There is a call request made through the satellite, assist the mobile phone in satellite pointing". When the user learns of the first prompt information, referring to FIG. 9E, after the pop-up window 801 is closed, the user may trigger to exit display of the application interface 900. For example, a finger of the user performs an operation of sliding upward from the bottom of the application interface 900. Referring to FIG. 9F, in response to a trigger operation of exiting the application interface 900, the mobile phone displays a desktop 700 of the mobile phone. The user may tap an application icon 71 of a satellite communication application on the desktop. In response to a tap operation on the application icon 71 of the satellite application, referring to FIG. 9G, the mobile phone may display an application interface 702 of the satellite application. The user may tap an enable control 72. In response to a tap operation on the enable control 72, the mobile phone starts to perform the satellite pointing operation with the assistance of the user, and displays a satellite search interface S1 shown in FIG. 9H. When the mobile phone displays the satellite search interface, the mobile phone starts to perform a satellite search operation in the satellite pointing operation, that is, the mobile phone may sequentially display, with the assistance of the user, the satellite pointing interfaces (also referred to as preset interfaces) shown in FIG. 5A, FIG. 5B, FIG. 5C, FIG. 5D, and FIG. 5E. If the user performs a service such as a call or an SMS message by using the mobile phone after the mobile phone establishes a connection to the satellite, the mobile phone may display the connection maintenance indication interface shown in FIG. 5F.

In another scenario, if the mobile phone receives a paging message from the satellite, and the mobile phone displays the application interface 702 of the satellite communication application, before the user triggers the enable control 72 in the application interface 702, the mobile phone may also present the first prompt information, that is, the application interface 72 is not an interface included in the preset interface (satellite pointing interface).

In another scenario, in a process in which the user uses the mobile phone, the mobile phone receives a paging message from the satellite. If the mobile phone currently displays the satellite search interface shown in FIG. 5A, or displays the azimuth angle alignment indication interface shown in FIG. 5B, or displays the elevation angle alignment indication interface shown in FIG. 5C, or displays the connection process indication interface shown in FIG. 5D, it indicates that the user has performed a satellite pointing operation. In this case, the mobile phone does not need to present the first prompt information. Alternatively, when the mobile phone receives a paging message from the satellite, the mobile phone displays the connection completion indication interface shown in FIG. 5E, which indicates that the mobile phone can directly respond to the paging message. In this case, the mobile phone does not need to present the first prompt information. When the mobile phone displays the interface indicating to maintain the connection to the satellite that is shown in FIG. 5F and that is displayed in a process in which a call service is being performed, if the mobile phone receives a paging message from the satellite (it is assumed herein that the paging message is used to call the terminal device), because the mobile phone has established the connection to the satellite, the mobile phone may respond to the paging message, and prompt the user whether to interrupt/retain a current call and answer a new call corresponding to the paging message.

A detailed implementation of the embodiments of this application is described below.

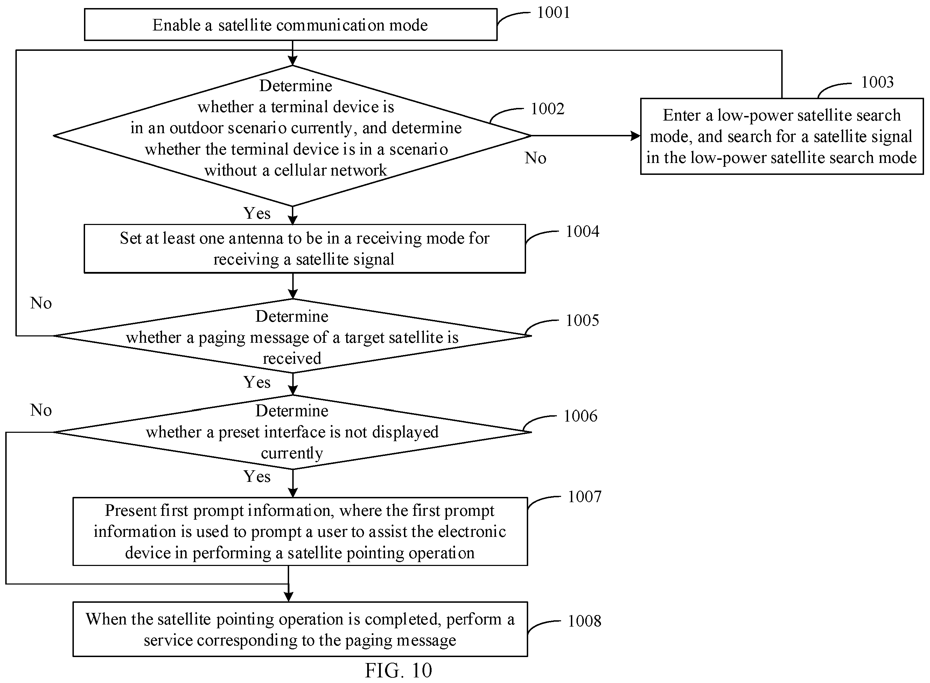

Refer to FIG. 10. FIG. 10 is a flowchart of a terminated call method for a terminal device according to an embodiment of this application. The method is applied to a terminal device. Referring to FIG. 10, the method includes the following steps.

Step 1001: Enable a satellite communication mode.

It should be noted that when a satellite communication function of the terminal device is in an enabled state, it indicates that the terminal device enables the satellite communication mode.

In some scenarios, a user may perform satellite communication. For example, when the user is in an area that cannot be covered by a cellular network, for example, on the sea or outdoors, communication needs to be performed by using a satellite. Alternatively, when a major accident occurs and communication cannot be performed by using a cellular network, the user may actively enable the satellite communication mode of the terminal device. Alternatively, the terminal device may always keep the satellite communication mode enabled by default, that is, the satellite communication function of the terminal device cannot be disabled, and is always kept in the enabled state.

Step 1002: Determine whether the terminal device is in an outdoor scenario currently, and determine whether the terminal device is in a scenario without a cellular network; and if no, perform the following operation in step 1003; or if yes, perform the operation in step 1004.

When the terminal device enables the satellite communication mode, a cellular network is usually used rarely. Therefore, when a determining result in step 1002 is yes, it indicates that the terminal device is in an outdoor scenario currently, and is in a scenario without a cellular network currently. In this case, the following operation in step 1004 may be performed.

It should be noted that a case in which a determining result in step 1002 is no includes a case in which the terminal device is in an outdoor scenario currently and is in a scenario with a cellular network currently, a case in which the terminal device is in a non-outdoor scenario currently and there is no cellular network, and a case in which the terminal device is in a non-outdoor scenario currently and there is a cellular network. Various communication modes may coexist in the terminal device. That is, when the satellite communication function of the terminal device is enabled, and the terminal device uses a cellular network, the terminal device may also receive a paging message from the satellite. For example, a dedicated antenna for receiving a satellite signal is disposed in the terminal device, and performance of the dedicated antenna is very high. In this case, the terminal device may receive a paging message from the satellite. Therefore, in addition to performing the following operation in step 1003, that is, entering a low-power satellite search mode in a case in which the satellite communication mode is enabled and the terminal device is in an outdoor scenario currently and cannot use a cellular network, the terminal device may also enter the low-power satellite search mode in another case. For example, when it is determined that the terminal device is not in an outdoor scenario currently and is in a scenario in which a cellular network can be used currently, or when it is determined that the terminal device is in an outdoor scenario currently and is in a scenario in which a cellular network can be used currently, the terminal device may enter the low-power satellite search mode to avoid affecting use of the terminal device. That is, when the determining result in step 1002 is no, the terminal device may perform the following step 1003 in any case in which the determining result is no.

In some embodiments, when the determining result in step 1002 is no, the terminal device may directly perform the following operation in step 1003, or certainly, may perform a different operation according to a specific case. For example, if a case in which the determining result in step 1002 is no is that the terminal device is in an outdoor scenario and there is a cellular network currently, the terminal device may perform the following operation in step 1003. If a case in which the determining result in step 1002 is no is that the terminal device is in a non-outdoor scenario (indoor scenario) and there is a cellular network currently, the terminal device may perform the following operation in step 1003, or may end the current procedure. If a case in which the determining result in step 1002 is no is that the terminal device is in a non-outdoor scenario and is in a scenario without a cellular network, the terminal device may perform the following operation in step 1003, or may end the current procedure. This is not specifically limited in this embodiment of this application.

It should be noted that the outdoor scenario may be a non-indoor scenario without blocking caused by a building. For example, the outdoor scenario may be a desert, a forest, a park, a sea, a mountain, or a grassland. When the terminal device is in some scenarios, strength of a cellular network signal that can be received by the terminal device may be low or even there is no cellular network signal. Therefore, the outdoor scenario may alternatively be a scenario in which strength of a cellular network signal is less than or equal to preset strength. For example, the outdoor scenario may be a scenario such as an elevator, a basement, a basement garage, or a tunnel. The scenario without a cellular network may be a scenario in which strength of a cellular network signal is less than or equal to preset strength.

It should be further noted that the preset strength may be preset according to a requirement. For example, the preset strength may be -115 dbm, -120 dbm, -124 dbm, or the like.

In an example, the terminal device may determine, by using ambient light data collected by a positioning module such as a GPS and/or an ambient light sensor, whether the terminal device is in an outdoor scenario currently.

In an example, a positioning module such as a GPS may perform a positioning operation on the terminal device to obtain positioning information; and whether the terminal device is in an outdoor scenario may be determined based on the positioning information. For example, when the positioning information indicates that the terminal device is in any scenario such as a street, a desert, a forest, a park, a sea, a mountain, or a grassland, it may be determined that the terminal device is in an outdoor scenario. When the positioning information indicates that the terminal device is in a scenario such as an office building, a shopping mall, a residential building, or a station, it may be determined that the terminal device is in an indoor scenario, that is, the terminal device is not in an outdoor scenario. Alternatively, when the terminal device cannot obtain the positioning information, it is determined that the terminal device is in an outdoor scenario.

In some embodiments, after obtaining the positioning information, the terminal device may further collect current ambient light intensity by using the ambient light sensor, and determine, based on the ambient light intensity and the positioning information, whether the terminal device is in an outdoor scenario.

Generally, in a daytime period, ambient light intensity of an outdoor scenario is greater than ambient light intensity of an indoor scenario. In a nighttime period, there is usually lighting indoors, so that ambient light intensity of an outdoor scenario is less than ambient light intensity of an indoor scenario. Therefore, the terminal device may determine, based on a current time period and ambient light intensity, whether the terminal device is in an outdoor scenario.

In an example, the terminal device may store a correspondence between scenarios and ambient light intensity in different time periods. In this way, the terminal device may determine, from the correspondence between scenarios and ambient light intensity based on a current time period and obtained ambient light intensity, whether the terminal device is in an outdoor scenario.

For example, when the current time period is noon and the obtained ambient light intensity is 50000 lux (lux), because ambient light intensity of an outdoor scenario on a sunny day is 30000~300000 lux, it may be determined that the terminal device is in an outdoor scenario.

The outdoor scenario may not only refer to a non-indoor scenario without blocking caused by a building, but also refer to a scenario in which strength of a cellular network signal is less than or equal to preset strength. Therefore, the terminal device may further determine, based on strength of a cellular network signal, whether the terminal device is in an outdoor scenario.

In some embodiments, when the strength of the cellular network signal of the terminal device is less than or equal to the preset strength, it is determined that the terminal device is in an outdoor scenario; or when the strength of the cellular network signal of the terminal device is greater than the preset strength, it is determined that the terminal device is not in an outdoor scenario.

It should be noted that when the terminal device determines, by using the strength of the cellular network signal, that the terminal device is in an outdoor scenario, it may be further determined that there is no cellular network currently.

In some embodiments, when the operation in step 1001 does not exist, and the terminal device cannot use a cellular network currently, if the terminal device is not in the satellite communication mode, that is, the satellite communication function of the terminal device is not enabled, the terminal device may actively switch a communication mode to the satellite communication mode, and perform the following operation in step 1004 in the satellite communication mode.

In some embodiments, regardless of whether the terminal device is in an outdoor scenario, when the terminal device cannot use a cellular network currently and the terminal device is not in the satellite communication mode, the terminal device may perform a low-power network search operation (that is, perform a low-power cellular network search operation). When no cellular network can be found within preset network search duration, the terminal device may switch to the satellite communication mode. In the satellite communication mode, if the terminal device is in an outdoor scenario currently, the following operation in step 1004 is performed; or if the terminal device is in a non-outdoor scenario currently, the following operation in step 1003 is performed. When a cellular network is found within preset network search duration, no communication mode switching operation is performed.

It should be noted that the preset network search duration may be preset according to a requirement. For example, the preset network search duration may be 1 minute, 2 minutes, or the like.

Step 1003: Enter a low-power satellite search mode, search for a satellite signal in the low-power satellite search mode, and return to step 1002.

It should be noted that the terminal device may return to the operation in step 1001, or may return to the operation in step 1002. This is not specifically limited in this embodiment of this application. A case of returning to step 1001 may mean that after the terminal device learns that the satellite communication function is disabled, the terminal device may return to step 1001 after completing the operation in step 1003. If the satellite communication function is not disabled, the terminal device may return to the operation in step 1002.

Step 1004: Set at least one antenna to be in a receiving mode for receiving a satellite signal.

It should be noted that the terminal device may receive a paging message from the satellite by using the set antenna.

It should be further noted that in this embodiment of this application, setting the at least one antenna to be in the receiving mode for receiving a satellite signal means that the at least one antenna can receive a satellite signal, but another function (for example, a transmitting function) of the antenna is not limited.

Currently, the satellite has a dedicated terminal device. In this case, an antenna design in the terminal device for the satellite is an independent design. That is, a dedicated antenna for the satellite may be separately disposed in the terminal device. However, currently, on the terminal device, it is difficult to separately dispose the dedicated antenna for the satellite. Therefore, in some terminal devices, an antenna is usually shared with another close frequency band, that is, the terminal device may receive a satellite signal by using an antenna for receiving a cellular network signal. For ease of description, in this embodiment of this application, an antenna that can receive both a cellular network signal and a satellite signal is referred to as a common antenna. However, if the common antenna needs to be kept shared with another module, an operating state of the common antenna may not be optimal. In this case, for the operating state of the common antenna, antenna tuning needs to be performed on the common antenna to ensure an optimal service.

Step 1005: Determine whether a paging message from a target satellite is received; and if yes, perform the following operation in step 1006; or if no, return to the operation in step 1002.

It should be noted that the step of determining may not exist in the operation in step 1005, and the operation in step 1005 may be receiving the paging message from the satellite, or the operation in step 1005 may be receiving no paging message from the satellite. When the operation in step 1005 is receiving the paging message from the satellite, the following operation in step 1006 is performed. When the operation in step 1005 is receiving no paging message from the satellite, the operation in step 1002 is returned to.

Step 1006: Determine whether a preset interface is not displayed currently; and if yes, perform the following operation in step 1007; or if no, perform a satellite pointing operation, or perform the following operation in step 1008.

It can be learned from the foregoing that, in a process of performing the satellite pointing operation, the terminal device may display the preset interface (a satellite pointing interface). If the terminal device does not display the preset interface, that is, the terminal device displays a non-satellite pointing interface, it is difficult for the terminal device to respond to the paging message from the satellite. Therefore, the terminal device needs to determine whether the preset interface is not displayed currently. The satellite pointing operation includes an operation of searching for the satellite (which may also be referred to as a satellite search operation), an angle alignment operation performed when the satellite is found (the angle alignment operation includes an elevation angle alignment operation and an azimuth angle alignment operation with the satellite), an operation of connecting to the satellite after the alignment operation, and a connection maintenance operation performed after a connection to the satellite is established. An interface corresponding to the satellite pointing operation is the preset interface, which is also referred to as a satellite pointing interface. The preset interface includes a satellite search indication interface (for example, the interface shown in FIG. 5A), an alignment indication interface corresponding to an angle alignment operation (for example, the interfaces shown in FIG. 5B and FIG. 5C), a connection process indication interface corresponding to a connection operation (as shown in FIG. 5D), and a connection completion indication interface corresponding to a connection maintenance operation (as shown in FIG. 5E). Certainly, after the terminal device establishes the connection to the satellite by performing the satellite pointing operation, the terminal device may complete some satellite services by using the satellite. In a process of performing the satellite service, to avoid disconnection from the satellite, the terminal device needs to remain in the satellite pointing interface. In this case, an interface for performing the satellite service may include a connection maintenance indication interface (as shown in FIG. 5F). Therefore, interfaces of such satellite services are also satellite pointing interfaces.

It should be noted that the corresponding interface in this embodiment of this application is only an example, and constitutes no limitation on the preset interface.

In an example, the terminal device may usually determine, by using a location of a sensor, whether a satellite pointing interface is displayed. The sensor may be an acceleration sensor, a gyroscope sensor, or the like.

In some embodiments, the non-satellite pointing interface is an interface displayed when no satellite pointing operation is performed, that is, an interface that is not the preset interface is a non-satellite pointing interface. In other words, the non-satellite pointing interface may be an interface that is not related to a satellite pointing operation. For example, the non-satellite pointing interface may be a lock screen interface, a desktop of the terminal device (such as the desktop shown in FIG. 7A or FIG. 7B), or an application interface of any application in the terminal device (for example, the application interface of the setting application shown in FIG. 8A or FIG. 8B, or the application interface of the gallery application shown in FIG. 9A or FIG. 9B, or the interface that is shown in FIG. 7C and that is displayed by the satellite communication application before the satellite pointing operation is started, or certainly an application interface of an application such as a video application, a shopping application, a music application, or a social application).

Step 1007: Present first prompt information, where the first prompt information is used to indicate to perform a satellite pointing operation.

To enable the terminal device to establish a connection to the satellite in a timely manner, the terminal device may present the first prompt information, to prompt the user to perform the satellite pointing operation.

In an example, the terminal device may present the first prompt information in at least one prompt manner, where the at least one prompt manner includes a voice prompt manner, a vibration prompt manner, and an interface prompt manner. The interface prompt manner includes at least one of an animation interface prompt, a picture interface prompt, a text interface prompt, and the like.

Step 1008: When the satellite pointing operation is completed, perform a service corresponding to the paging message.

After the terminal device presents the first prompt information, the user may perform a series of operations on the terminal device, so that the terminal device may perform the satellite pointing operation based on the operations of the user. After the satellite pointing operation is completed, the terminal device may implement the connection to the satellite.

It should be noted that the service corresponding to the paging message is the target service in the embodiments of this application.

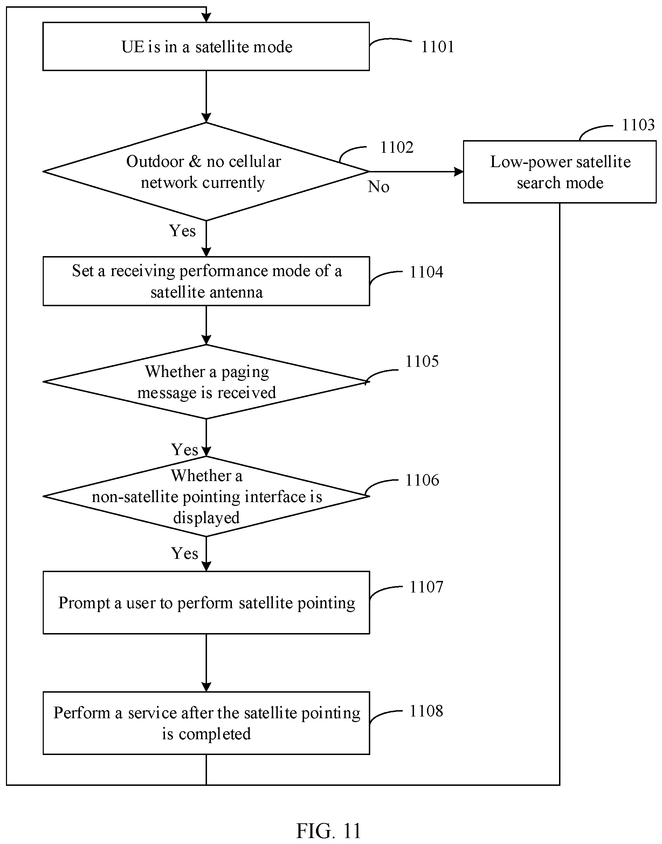

In the embodiments of this application, the steps in FIG. 10 may be simplified as a flowchart shown in FIG. 11. The process is as follows.

Step 1101: UE is in a satellite mode.

Step 1102: Determine whether the UE is outdoors & there is no cellular network currently; and if yes, perform the operation in step 1104; or if no, perform the operation in step 1103.

Step 1103: Enter a low-power satellite search mode, and return to the operation in step 1101.

Step 1104: Set a receiving performance mode of a satellite antenna.

Step 1105: Determine whether a paging message is received; and if yes, perform the operation in step 1106.

Step 1106: Determine whether a non-satellite pointing interface is displayed; and if yes, perform the operation in step 1107.

Step 1107: Prompt a user to perform satellite pointing.

Step 1108: After the satellite pointing is completed, perform a service, and return to the operation in step 1101.

It should be noted that the steps in FIG. 11 are simplification of the steps in FIG. 10. Therefore, specific operations in step 1101-step 1108 are the same as the operations in step 1001-step 1008. Details are not described in this embodiment of this application.

In this embodiment of this application, when the terminal device cannot successfully use a cellular network currently, if the paging message from a satellite is received, the first prompt information may be presented in a case in which a non-satellite pointing interface is displayed currently. The first prompt information is used to prompt a user to assist the terminal device in performing a satellite pointing operation. When receiving the paging message from the satellite, the terminal device may present the first prompt information. In this way, the user can quickly perceive that there is a satellite paging event, to quickly enter the satellite pointing interface to perform the satellite pointing operation, thereby accelerating establishment of the connection to the satellite, ensuring that a notified service is normally performed, and improving a success rate of implementing an emergency service such as an incoming call by the satellite.

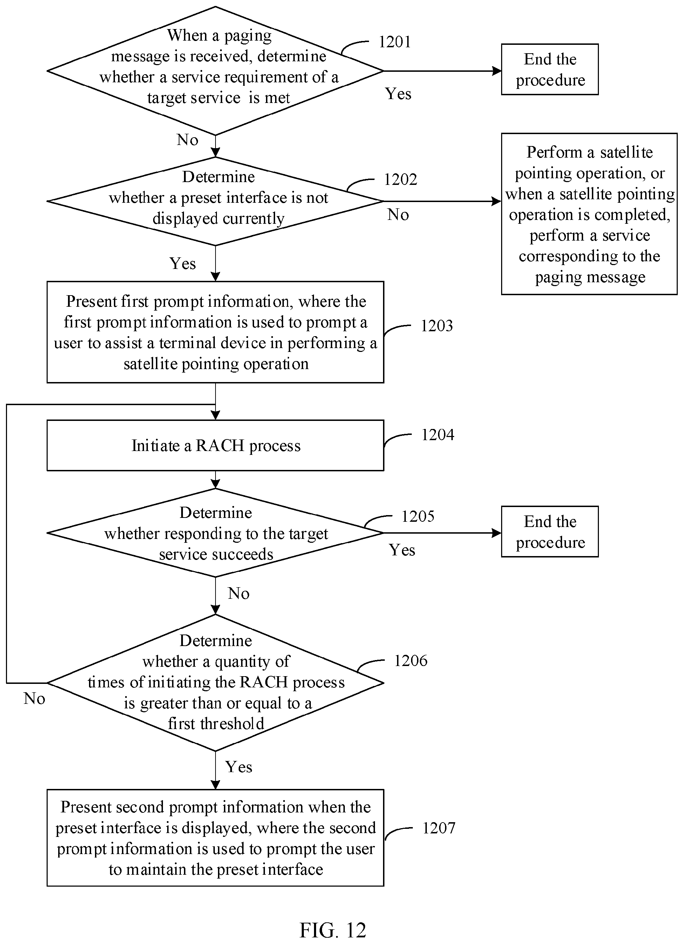

It should be noted that, when the terminal device receives the paging message, not only the terminal device may be prompted in the manner in step 1006-step 1008 in FIG. 10, to perform the service corresponding to the paging message, but also the terminal device may be prompted in another manner. For example, in this application, the operations in step 1006-step 1008 in FIG. 10 may be replaced with the following operations in step 1201-step 1206 in FIG. 12.

Step 1201: When a paging message is received, determine whether a service requirement of a target service is met; and if no, perform the following operation in step 1202; or if yes, end the procedure.

It should be noted that, that a terminal device meets the service requirement of the service means that the terminal device can send a message.

Because an antenna with relatively high performance may exist in the terminal device, after receiving a satellite signal, such an antenna has a specific probability of successfully sending a message to a satellite, thereby implementing a connection to the satellite. In this case, the terminal device can respond to a paging message from the satellite, and may not perform a satellite pointing operation. Therefore, when the terminal device receives the paging message, if the terminal device determines that the service requirement of the target service is met, the terminal device may respond to the paging message, and after ending responding to the paging message, return to the foregoing operation in step 1005. Alternatively, when determining that the service requirement of the target service is met, the terminal device may end the procedure.

In an example, when the paging message is received, if the terminal device determines that the service requirement of the target service is not met, it indicates that the terminal device cannot send a message to the satellite, and the terminal device needs to perform a satellite pointing operation. Therefore, the terminal device may perform the following operation in step 1202 or step 1203. In this embodiment of this application, an example in which the operation in step 1202 is performed is used for description.

Step 1202: Determine whether a preset interface is not displayed currently; and if yes, perform the following operation in step 1203; or if no, perform a satellite pointing operation, or when a satellite pointing operation is completed, perform a service corresponding to the paging message.

Step 1203: Present first prompt information, and perform the following operation in step 1204, where the first prompt information is used to prompt a user to assist the terminal device in performing a satellite pointing operation.

Step 1204: Initiate a RACH process.

In some embodiments, when receiving the paging message, the terminal device may actively initiate a message to an upper layer. After receiving an incoming call, the upper layer may prompt the user to perform a satellite pointing operation. In addition, to increase a possibility of implementing the target service by the terminal device, the terminal device may synchronously initiate RACH access.

Because there is a possibility that the terminal device fails to initiate RACH access, a quantity of times of initiating RACH access may be increased, that is, the terminal device may initiate the RACH process a plurality of times. In other words, the terminal device may perform the operation in step 1204 a plurality of times.

In some embodiments, a RACH access network may be controlled each time the RACH process is initiated. For example, signal strength of a transmitted signal may be controlled.

For example, the terminal device controls signal strength of transmitted signals to increase successively. To be specific, signal strength of a latter initiated RACH process is greater than signal strength of a former initiated RACH process. For example, the quantity of times of initiating RACH is 5, signal strength of a RACH process initiated for the first time is A, signal strength of a RACH process initiated for the second time is A+2, signal strength of a RACH process initiated for the third time is A+4, signal strength of a RACH process initiated for the fourth time is A+6, and signal strength of a RACH process initiated for the fifth time is A+8. Alternatively, signal strength of a RACH process initiated for the first time is A, signal strength of a RACH process initiated for the second time is A+2, signal strength of a RACH process initiated for the third time is A+4, signal strength of a RACH process initiated for the fourth time is A+8, and signal strength of a RACH process initiated for the fifth time is A+12.

In some embodiments, the terminal device may control not only signal strength of a signal transmitted when RACH is initiated, but also the quantity of times of initiating the RACH process. For example, the quantity of times of initiating the RACH process may be controlled to be 8. In addition, signal strength of a RACH process initiated for the first time is A, signal strength of a RACH process initiated for the second time is A+2, signal strength of a RACH process initiated for the third time is A+4, signal strength of a RACH process initiated for the fourth time is A+6, signal strength of a RACH process initiated for the fifth time is A+8, signal strength of a RACH process initiated for the sixth time is A+10, signal strength of a RACH process initiated for the seventh time is A+12, and signal strength of a RACH process initiated for the eighth time is A+14.

In some embodiments, the terminal device can control not only signal strength of RACH and the quantity of times of initiating the RACH process, but also transmit power. For example, transmit power of initiated RACH processes may be controlled to increase successively. In addition/alternatively, transmit power of last N RACH processes is controlled to be maximum transmit power.

It should be noted that after initiating the RACH process each time, the terminal device may perform the following operation in step 1205 or step 1206.

Step 1205: Determine whether responding to the target service succeeds; and if yes, end the procedure; or if no, perform the following operation in step 1206.

It should be noted that, that responding to the target service succeeds may mean that the terminal device successfully responds to the paging message.

After the terminal device presents the first prompt information, the user may perform some operations on the terminal device, so that the terminal device performs the satellite pointing operation. In this way, the terminal device may establish a connection to the satellite, to complete the target service. In this case, the terminal device successfully responds to the target service, and may end the procedure. In addition, if the terminal device successfully initiates the RACH process, there is a probability that responding to the target service succeeds. In this case, the procedure may also be ended. However, if the satellite pointing operation is not timely, or RACH fails to be initiated, and responding to the target task fails, the terminal device may perform the following operation in step 906.

Step 1206: Determine whether the quantity of times of initiating the RACH process is greater than or equal to a first threshold; and if yes, perform the following operation in step 1207; or if no, perform the operation in step 1204.

It should be noted that the first threshold may be preset according to a requirement. For example, the first threshold may be 5 times, 6 times, 8 times, or the like.

In some embodiments, when the quantity of times of initiating the RACH process is less than the first threshold, the terminal device may continue to initiate the RACH process in the manner in step 1204, and after initiating the RACH process each time, perform the operation in step 1205.

It should be noted that a sequence of performing step 1205 and step 1206 is not specifically limited in this embodiment of this application. That is, the terminal device may first perform the operation in step 1205, and if a determining result in step 1205 is that responding to the target service fails, perform the operation in step 1206. Certainly, the terminal device may alternatively first perform the operation in step 1206, perform the operation in step 1205 when the quantity of times of initiating the RACH process is greater than or equal to the first threshold, and perform the following operation in step 1207 when a determining result in step 1205 is that responding to the target service fails.

In some embodiments, after the terminal device presents the first prompt information, the terminal device may not perform the satellite pointing operation. In this case, whether the quantity of times of initiating the RACH process is greater than or equal to the first threshold is determined, and the terminal device may further return to the operation in step 1203, or end the current procedure. This is not specifically limited in this embodiment of this application.

Step 1207: Present second prompt information when the preset interface is displayed, where the second prompt information is used to prompt the user to maintain the preset interface.

In an example, the second prompt information may be provided in at least one of a voice prompt manner, a vibration prompt manner, and an interface prompt manner.

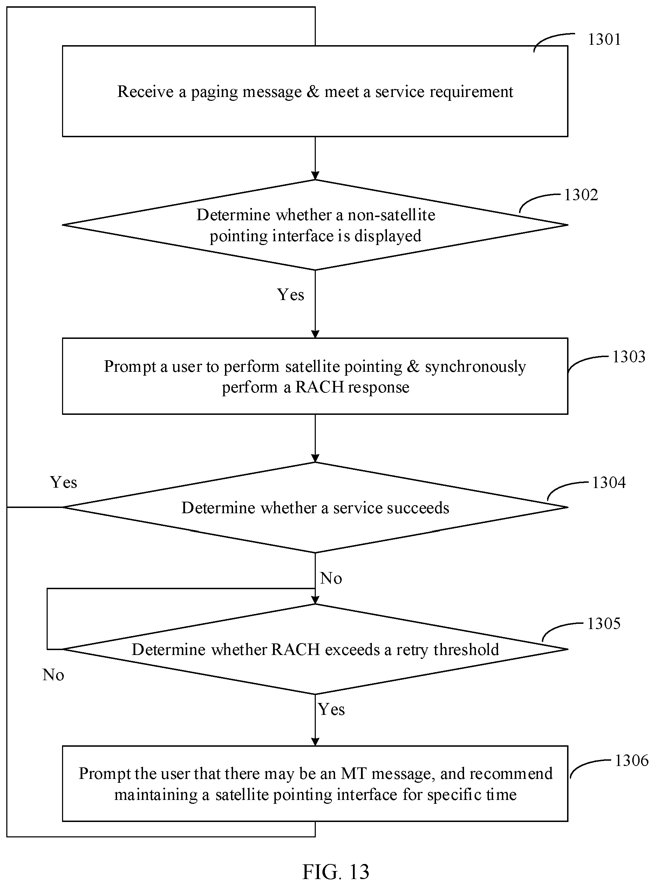

In the embodiments of this application, the steps in FIG. 12 may be simplified as a flowchart shown in FIG. 13. The process is as follows.

Step 1301: Receive a paging message & meet a service requirement.

Step 1302: Determine whether a non-satellite pointing interface is displayed; and if yes, perform the operation in step 1303.

Step 1303: Prompt a user to perform satellite pointing & synchronously perform a RACH response.

Step 1304: Determine whether a service succeeds; and if yes, return to the operation in step 1301; or if no, perform the operation in step 1305.

Step 1305: Determine whether RACH exceeds a retry threshold (that is, determine whether a quantity of random access times exceeds the retry quantity-of-times threshold); and if yes, perform the operation in step 1306; or if no, perform the operation in step 1305.

Step 1306: Prompt the user that there may be an MT message, recommend maintaining a satellite pointing interface for specific time, and return to the operation in step 1301.

In this embodiment of this application, when the terminal device cannot use a cellular network currently, if a paging message from a target satellite is received, first prompt information may be presented and a RACH process may be initiated in a case in which a non-satellite pointing interface is displayed currently. When a quantity of times of initiating the RACH process exceeds a specific quantity, the terminal device may prompt the user to maintain the satellite pointing interface. The first prompt information is used to prompt the user to assist the terminal device in performing a satellite pointing operation. When receiving the paging message from the target satellite, the terminal device may present the first prompt information and prompt the user to assist the terminal device in performing the satellite pointing operation. In this way, the user can quickly perceive that there is a satellite paging event, to quickly assist the terminal device in entering a satellite pointing interface to perform the satellite pointing operation, thereby accelerating establishment of the connection to the satellite, and ensuring that a notified service is normally performed. In addition, because the user can be prompted to maintain the satellite pointing interface for specific time, a success rate of implementing an emergency service such as an incoming call by the satellite is improved.

In some embodiments, the terminal device may present, in the manner in FIG. 10 or FIG. 12, the first prompt information when the paging message is received and the non-satellite pointing interface is displayed. In another possible manner, a calling device may mistakenly use a satellite communication function to call a called terminal device. Therefore, to improve intelligence of a terminated call for the terminal device, the terminal device may present the first prompt information when the paging message is received and the paging message is not responded to for a long time (for example, first preset duration, where the first preset duration may be 30 seconds or 40 seconds) in a process of receiving the paging message, or when the paging message is received and the paging message is not responded to before paging ends. Alternatively, when the terminal device fails to respond to the paging message, the terminal device presents the first prompt information. An occasion for presenting the first prompt information is not specifically limited in this embodiment of this application.

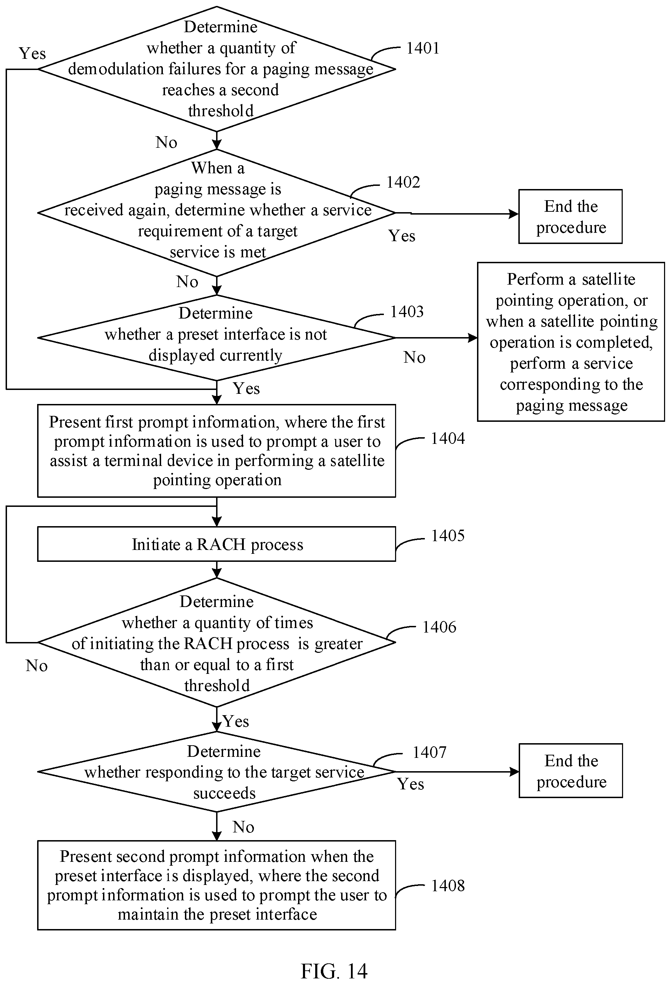

It should be noted that a calling device may mistakenly call a terminal device (a called device) by using a satellite. In this case, if the terminal device does not respond to a paging message of the satellite, it is unnecessary to prompt the terminal device to perform a satellite pointing operation. Therefore, to improve intelligence of the terminal device, the embodiments of this application may not only include the terminated call method for a terminal device shown in FIG. 10 or FIG. 12. An embodiment of this application further provides another terminated call method for a terminal device. Referring to FIG. 14, an electronic device may replace the operations in step 1006-step 1008 with the following operations in step 1401-step 1408 in FIG. 14.

Step 1401: Determine whether a quantity of demodulation failures for a paging message reaches a second threshold; and if yes, perform the following operation in step 1404; or if no, perform the following operation in step 1402.

A calling device may call a terminal device a plurality of times by using a satellite. However, if the terminal device has not completed satellite pointing with the satellite, the terminal device fails to respond to each paging message sent by the satellite a plurality of times. In this case, the terminal device may determine whether a quantity of times of demodulating the paging message reaches the second threshold.

It should be noted that the second threshold may be preset according to a requirement. For example, the second threshold may be 3 times, 4 times, or the like.

It should be further noted that when the quantity of demodulation failures for the paging message reaches the second threshold, it indicates that the terminal device has a large quantity of satellite communication services, and a user of the terminal device needs to perform processing in a timely manner. Therefore, the terminal device may directly perform the following operation in step 1404.

In some embodiments, when the quantity of demodulation failures for the paging message does not reach the second threshold, the terminal device may perform the following operation in step 1402, or may not perform the operation in step 1402 and return to the operation in step 1401. This is not specifically limited in this embodiment of this application.

Step 1402: When a paging message is received again, determine whether a service requirement of a target service is met; and if no, perform the following operation in step 1403; or if yes, end the procedure, or perform the operation in step 1002, or perform the operation in step 1401.

Not all paging messages are mistakenly triggered by the calling device. Therefore, when the quantity of demodulation failures for the paging message does not reach the second threshold, if a paging message is received again, whether the terminal device meets the service requirement of the target service may be determined. For this operation, refer to the operation in step 1201.

Step 1403: Determine whether a preset interface is not displayed currently; and if yes, perform the following operation in step 1404; or if no, perform a satellite pointing operation, or when a satellite pointing operation is completed, perform a service corresponding to the paging message. Details are not described one by one in this embodiment of this application.

It should be noted that, for the operation in step 1403, refer to the operation in step 902. Details are not described one by one again in this embodiment of this application.

Step 1404: Present first prompt information, and perform the following operation in step 1405, where the first prompt information is used to prompt a user to assist the terminal device in performing a satellite pointing operation.

It should be noted that, for the operation in step 1404, refer to the operation in step 903. Details are not described one by one again in this embodiment of this application.

Step 1405: Initiate a RACH process.

It should be noted that the terminal device may control the RACH access network each time the RACH process is initiated. For example, signal strength of RACH access, a transmit frequency, and a quantity of times of initiating the RACH process may be controlled. For this operation, refer to the descriptions of initiating the RACH process in step 1204. Details are not described one by one in this embodiment of this application.

Step 1406: Determine whether the quantity of times of initiating the RACH process is greater than or equal to a first threshold; and if yes, perform the following operation in step 1407; or if no, perform the operation in step 1405.

Step 1407: Determine whether responding to the target service succeeds; and if yes, end the procedure; or if no, perform the following operation in step 1408.

Step 1408: Present second prompt information when the preset interface is displayed, where the second prompt information is used to prompt the user to maintain the preset interface.

It should be noted that, for the operations in step 1406-step 1408, refer to the operations in step 905-step 907. Details are not described one by one again in this embodiment of this application.

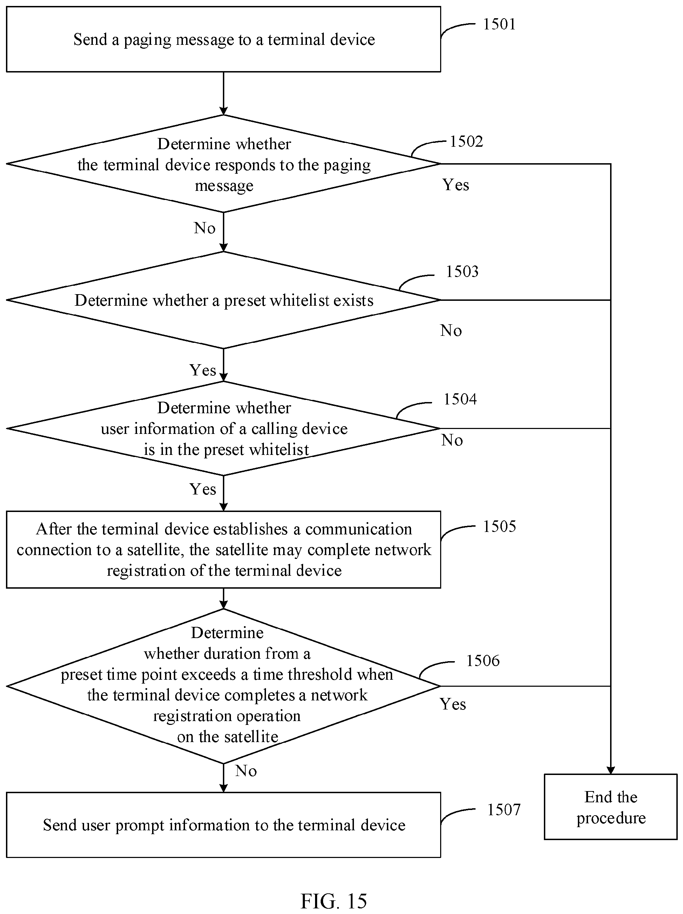

In this embodiment of this application, because a satellite resource is limited, when a satellite cannot call a terminal device, some satellites may use enhanced paging (in this mode, the terminal device may receive a paging message, but the terminal device is limited in uplink and cannot initiate a service). However, regardless of enhanced paging or the first prompt information or the second prompt information in this embodiment of this application, a user of the terminal device only knows that there is a missed call, but does not know which calling user initiates the call, and the terminal device cannot actively contact the peer party. Therefore, to improve intelligence of the terminal device, in this embodiment of this application, the user who initiates the call may be further prompted. Referring to FIG. 15, an embodiment of this application provides another terminated call method for a terminal device. Referring to FIG. 10, the method is described by using a satellite as an execution body. Referring to FIG. 15, the method includes the following steps.

Step 1501: Send a paging message to a terminal device.

It should be noted that the paging message is sent by the satellite based on a call message sent by a calling device after the calling device sends the call message to the satellite.

Step 1502: Determine whether the terminal device responds to the paging message; and if yes, end the subsequent operation; or if no, perform the following operation in step 1503.

It should be noted that, that the satellite determines that the terminal device responds to the paging message means that the satellite establishes a communication connection to the terminal device, and the terminal device may implement a communication service by using the established connection. In this case, the following steps do not need to be continued. When the terminal device does not respond to the paging message, the terminal device does not know which user makes the call. Therefore, to enable a user of the terminal device to actively call the calling device, when it is determined that the terminal device does not respond to the paging message, the satellite may continue to perform the following steps.

Step 1503: Determine whether a preset whitelist exists; and if yes, perform the operation in step 1504; or if no, end the subsequent operation.

Generally, if the terminal device has previously performed network registration on the satellite, after network registration is performed, the satellite may prompt, by using fourth prompt information, the user of the terminal device to set the preset whitelist. After the terminal device sets the preset whitelist, the satellite may store the preset whitelist corresponding to the terminal device. User information in the preset whitelist is user information that is allowed to be indicated by the satellite to the terminal device when the satellite fails to call the terminal device. Sometimes, the terminal device may not perform network registration on the satellite before, and consequently the satellite does not store the preset whitelist. Alternatively, although the terminal device has performed network registration on the satellite, the terminal device does not perform an operation of setting the preset whitelist. In this case, the satellite does not store the preset whitelist. Therefore, the satellite may determine whether the preset whitelist exists.

When the preset whitelist does not exist, although the terminal device may indicate, by using first prompt information, that a satellite call occurs, a user who initiates the call by using the satellite cannot be indicated. Therefore, the satellite does not need to perform the following steps.

Step 1504: Determine whether user information of the calling device is in the preset whitelist; and if yes, perform the following operation in step 1205; or if no, end the subsequent operation.

Step 1505: After the terminal device establishes a communication connection to the satellite, the satellite may complete network registration of the terminal device.

When the terminal device does not respond to the paging message, or when the terminal device receives the paging message from the satellite, the terminal device may present a prompt in the manner described in FIG. 10, FIG. 11, FIG. 12, FIG. 13, or FIG. 14, and the user of the terminal device may perform a satellite pointing operation by using the terminal device based on the prompt. After the satellite pointing operation succeeds, the terminal device may establish a communication connection to the satellite, so that the terminal device may perform network registration on the satellite.

Step 1506: Determine whether duration from a preset time point exceeds a time threshold when the terminal device completes a network registration operation on the satellite; and if yes, end the procedure; or if no, perform the following operation in step 1507.

It should be noted that the time threshold may be preset according to a requirement. For example, the time threshold may be 1 minute, 3 minutes, 5 minutes, or the like. The preset time point may be a time point at which the satellite sends the paging message to the terminal device, or the preset time point may be a time point at which the first message sent by the terminal device is received in a process of establishing a communication connection to the terminal device. The preset time point is not specifically limited in this embodiment of this application.

In some embodiments, a sequence of performing step 1503 and step 1505 is not specifically limited in this embodiment of this application. That is, this embodiment of this application may be performed in the execution sequence shown in FIG. 15, or may be performed in another sequence. For example, when step 1502 is performed, if it is determined that the terminal device does not respond to the paging message after paging ends, step 1505-step 1506 may be first performed, and when step 1206 is performed, if it is determined that the network registration operation of the terminal device does not exceed the time threshold, the operations in step 1503-step 1504 are successively performed. When step 1504 is performed, if it is determined that the user information of the calling device is in the whitelist, the following operation in step 1507 is performed. This is not specifically limited in this embodiment of this application.

Step 1507: Send user prompt information to the terminal device.

It should be noted that the user prompt information includes information about the user who pages the terminal device by using the current paging message, that is, the user prompt information is used to indicate information about a user who calls the terminal device last time by using the satellite.

In some embodiments, the user prompt information may be sent to the terminal device in a form of an SMS message, or may be sent to the terminal device in a manner of application notification information. This is not specifically limited in this embodiment of this application.

In this embodiment of this application, when the terminal device fails to respond to the satellite call, after the satellite subsequently establishes a connection to the terminal device, the satellite may indicate, to the terminal device, information about the user who initiates the call, so that the user who uses the terminal device can choose whether to call back, thereby improving intelligence of the terminal device.

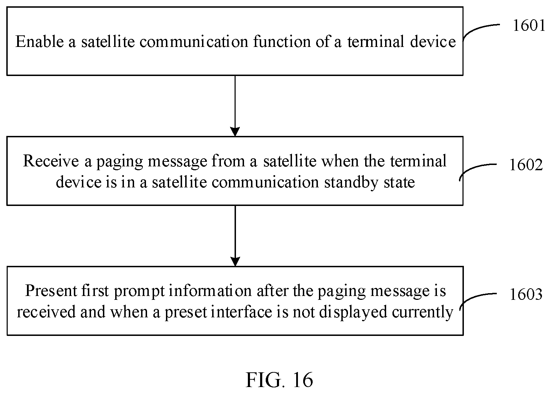

Next, for a flowchart of another terminated call method for a terminal device according to an embodiment of this application, referring to FIG. 16, the method is applied to a terminal device. Referring to FIG. 16, the method includes the following steps.

Step 1601: Enable a satellite communication function of the terminal device.

It should be noted that when a satellite communication function of the terminal device is in an enabled state, it indicates that the terminal device enables the satellite communication mode.

In an example, a user may actively enable the satellite communication function of the terminal device by using a satellite communication application or a setting application. Alternatively, the terminal device may actively enable the satellite communication function.

In some embodiments, when the satellite communication function is set to the enabled state, the terminal device may set the satellite communication function to the enabled state by using the software decision center shown in FIG. 4. Certainly, the terminal device may alternatively perform setting by using another module. This is not specifically limited in this embodiment of this application.

It should be noted that the satellite communication function of the terminal device is set to the enabled state, so that the terminal device can successfully receive a paging message from a satellite.

In some embodiments, before setting the satellite communication function of the terminal device to the enabled state, the terminal device may further detect a scenario in which the terminal device is located; and set the satellite communication function of the terminal device to the enabled state when the terminal device is in an outdoor scenario, where the outdoor scenario is a scenario in which strength of a cellular network signal is less than or equal to preset strength.

It should be noted that, for the operation of detecting, by the terminal device, the scenario in which the terminal device is located, refer to the operation in step 1002. Details are not described one by one in this embodiment of this application.

When it is detected that the terminal device is in an outdoor scenario, if the satellite communication function of the terminal device is in a disabled state, the terminal device may not successfully receive a message sent by using a cellular network, and cannot successfully receive the paging message sent by the satellite. Therefore, to prevent as far as possible the terminal device from missing the paging message of the satellite, in this case, the terminal device may actively enable the satellite communication function. In other words, the terminal device may actively switch a communication mode to the satellite communication mode.

In some embodiments, if the terminal device is in an outdoor scenario and the satellite communication function of the terminal device is in the enabled state, the terminal device may keep the satellite communication function enabled.

In some embodiments, the terminal device may actively disable the satellite communication function when detecting that strength of a cellular network signal is greater than the preset strength and the terminal device does not receive a paging message from the satellite for a long time (for example, 1 day or 12 hours). Alternatively, the terminal device may disable the satellite communication function when receiving a disable operation performed by the user on the satellite communication function.

It should be noted that, the satellite communication function is actively enabled in the outdoor scenario, so that it is ensured that a communication function of the terminal device runs normally.

In some embodiments, after the terminal device enables the satellite communication function, an antenna tuning operation may be performed on at least one antenna for receiving a satellite signal in the terminal device when the terminal device is in a satellite communication standby state, so that receiving performance of each of the at least one antenna for receiving a satellite signal meets a preset condition. The satellite communication standby state is a mode in which no satellite pointing operation is performed when the satellite function is enabled.

It should be noted that the at least one antenna for receiving a satellite signal may include at least one of a dedicated antenna and a common antenna, and the dedicated antenna is an antenna specifically configured to receive a satellite signal.

In an example, the preset condition may be that performance of a tuned antenna is an antenna with highest performance in all antennas of the terminal device. Alternatively, the preset condition is that performance of a tuned antenna is N times performance before tuning, where N is greater than 1. Alternatively, the preset condition is that performance of a tuned antenna is optimal performance that can be achieved by the antenna.

It should be noted that, when the terminal device is in the satellite communication standby state, antenna performance can be improved by performing a tuning operation on at least one antenna, thereby increasing a possibility that the terminal device is successfully connected to the satellite.

In some embodiments, when antennas of the terminal device do not include a dedicated antenna that can receive a satellite signal, at least one antenna for receiving a cellular network signal in the terminal device may be set to be in a receiving mode for receiving a satellite signal.

In this way, it is ensured that an antenna that can receive a satellite signal exists in the terminal device.

It can be learned from the foregoing that a dedicated antenna and/or a common antenna may be disposed in the terminal device. The dedicated antenna is an antenna disposed for the satellite. The dedicated antenna may receive a message (or referred to as a signal or an electromagnetic wave) sent by the satellite, and does not receive a message (or referred to as a signal or an electromagnetic wave) sent by another device. The common antenna is an antenna that can receive messages (or referred to as signals or electromagnetic waves) sent by a plurality of types of devices, that is, the common antenna can be reused. In a possible case, when the dedicated antenna and the common antenna exist in the terminal device, if the terminal device enables the satellite communication function, the terminal device may enable the dedicated antenna and/or set modes of some common antennas to a mode in which a satellite signal can be received. When no dedicated antenna exists in the terminal device, the terminal device may set at least one antenna in common antennas to be in a receiving mode for receiving a satellite signal.

In some embodiments, if the common antenna needs to be kept shared with another module, an operating state of the common antenna may not be optimal. Therefore, for the operating state of the common antenna, the terminal device may further perform an antenna tuning operation on the common antenna, to ensure an optimal service. That is, an antenna tuning operation may be further performed on at least one antenna for receiving a cellular network signal in the terminal device when the terminal device is in the satellite communication mode.

It should be noted that the antenna tuning operation is performed on the at least one antenna for receiving a cellular network signal, thereby improving receiving performance of a tuned antenna, and improving a paging message receiving capability.

Step 1602: Receive the paging message from the satellite when the terminal device is in the satellite communication standby state.

It should be noted that the satellite communication standby state is a state in which no satellite pointing operation is performed when the satellite communication function is enabled.

In an example, when the terminal device is in the satellite communication standby state, a paging message from a satellite signal is received by using at least one antenna for receiving a satellite signal.

Because the at least one antenna for receiving a satellite signal may include a dedicated antenna and a common antenna, the terminal device may receive the paging message from the satellite by using an antenna in the satellite front-end component shown in FIG. 4. Certainly, the terminal device may alternatively receive the paging message from the satellite by using a common antenna in another front-end component, such as an NC front-end component, a modem front-end component, or an LBS front-end component. Generally, the paging message from the satellite may be received by using the modem front-end component. This is not specifically limited in this embodiment of this application.

Step 1603: Present first prompt information after the paging message is received and when a preset interface is not displayed currently.

After the paging message is received, the user may operate the terminal device to perform a satellite pointing operation in a short time. In this case, the terminal device displays the preset interface. In this way, the terminal device does not need to present the first prompt information. However, if the terminal device does not display the preset interface in a short time after receiving the paging message (for example, duration such as 200 milliseconds, 1 second, or 3 seconds after receiving the paging message), that is, the terminal device does not perform a satellite pointing operation, to enable the terminal device to establish a connection to the satellite, the terminal device may present the first prompt information to prompt the user to assist the terminal device in performing a satellite pointing operation.

It should be noted that the first prompt information is used to prompt the user to assist the terminal device in performing the satellite pointing operation, and the preset interface is a plurality of preset interfaces related to the satellite pointing operation. For example, the preset interface includes the interfaces shown in FIG. 5A, FIG. 5B, FIG. 5C, FIG. 5D, FIG. 5E, and FIG. 5F. Each interface included in the preset interface may be referred to as a satellite pointing interface, and an interface other than the preset interface may be referred to as a non-satellite pointing interface. The non-satellite pointing interface is an interface displayed when no satellite pointing operation is performed. For example, the non-satellite pointing interface may be a desktop of the terminal device, a lock screen interface, an application interface of any application, or the like.

In some embodiments, when the preset interface is not displayed currently, if the paging message is not responded to, the terminal device may present the first prompt information.

That is, in this embodiment of this application, the terminal device may directly present the first prompt information when the paging message from the satellite is received and the preset interface is not displayed currently. Certainly, the terminal device may alternatively present the first prompt information when paging ends and the paging message is not responded to.

It should be noted that, the first prompt information is presented on different occasions, thereby enriching prompt occasions.

In some embodiments, the terminal device may present the first prompt information in at least one prompt manner after the paging message is received and when the preset interface is not displayed currently, where the at least one prompt manner includes a voice prompt manner, a vibration prompt manner, and an interface prompt manner.

It should be noted that, prompt is performed in a plurality of manners, so that prompt manners of the terminal device are enriched.

In some embodiments, when the preset interface is displayed currently, the terminal device may present the first prompt information and initiate a RACH process; when no connection to the satellite is established, determine a quantity of times of initiating the RACH process; and when the quantity of times of initiating the RACH process is less than or equal to a first threshold, return an operation of initiating the RACH process; or when the quantity of times of initiating the RACH process is greater than a first threshold and responding to a target service fails, present second prompt information if the preset interface is displayed currently, where the second prompt information is used to indicate to maintain the preset interface.

In some embodiments, in a case of initiating the RACH process, the terminal device may control a RACH access network each time the RACH process is initiated. For example, signal strength of each time of RACH access, a transmit frequency, and a first threshold for initiating the RACH process may be controlled. For this process, refer to the operation in step 903.

It should be noted that, when the connection to the satellite fails to be established, a possibility of communication connection between the terminal device and the satellite can be improved by performing the RACH process a plurality of times.

In some embodiments, before presenting the first prompt information in a case that the preset interface is not displayed currently, the terminal device may further determine a quantity of times of not responding to a paging message (a quantity of demodulation failures for the paging message) within second preset duration before the paging message is received this time; and when the quantity of demodulation failures is greater than or equal to a second threshold, if a non-satellite pointing interface is displayed currently, present the first prompt information. When the quantity of times of not responding to the paging message is less than the second threshold, the procedure is ended.

It should be noted that the second preset duration may be preset according to a requirement. For example, the second preset duration may be 1 minute, 3 minutes, 5 minutes, or the like.

In some embodiments, after the first prompt information is presented in a case that the paging message is received and the preset interface is not displayed currently, the terminal device may further perform a satellite pointing operation based on a user operation, to establish a connection to the satellite. After the connection to the satellite is established, user prompt information from the satellite may be received, where the user prompt information includes information about a user who pages the terminal device by using the paging message.

After the terminal device presents the first prompt information, the user may use the terminal device to complete the satellite pointing operation. When the satellite pointing operation is completed, the terminal device can successfully establish a communication connection to the satellite. In this case, the satellite may send the user prompt information to the terminal device. In this way, the terminal device may receive the user prompt information.

It should be noted that the satellite may directly send the user prompt information to the terminal device, or the satellite may send the user prompt information to the terminal device by using a ground satellite base station. Certainly, the satellite may alternatively send the user prompt information to the terminal device by using any operator server accessed by the terminal device or a ground base station of the operator server.

It should be noted that the user prompt information may be at least one of an SMS message, a call, a notification message of a satellite communication application, and the like.

It should be noted that, based on the user prompt information, the user who uses the terminal device can learn of the information about the user who calls the terminal device, so that whether to call back can be determined based on the user information, thereby improving autonomy of the user.

In some embodiments, after the terminal device establishes the communication connection to the satellite, the satellite may further determine whether a network registration operation of the terminal device (the terminal device performs network registration when establishing the communication connection to the satellite) exceeds a time threshold; and when the time threshold is exceeded, does not send the user prompt information to the terminal device; or when the time threshold is not exceeded, sends the user prompt information to the terminal device.

It should be noted that the information about the user may be user information in a preset whitelist. The user information in the preset whitelist is information that the terminal device allows the satellite to indicate. That is, when the user information in the preset whitelist is used to initiate a call to the terminal device, and the terminal device fails to respond to the call, the terminal device allows the satellite to indicate a caller.

In an example, the preset whitelist set by the terminal device may be stored in the satellite and the terminal device, and the preset whitelist is an editable whitelist. That is, the preset whitelist is allowed to be added, deleted, or the like.

In some embodiments, the preset whitelist may be set after the terminal device establishes a communication connection to the satellite and when the terminal device receives fourth prompt information sent by the satellite. Certainly, the terminal device may alternatively preset the preset whitelist when no communication connection to the satellite is established. After the terminal device establishes a communication connection to the satellite, the terminal device synchronizes the preset whitelist to the satellite.

In a possible implementation, the preset whitelist may not be set in the satellite. When the preset whitelist is not set, the satellite may not send the user prompt information to the terminal device.

In another possible implementation, when the preset whitelist is not set, the satellite may send user prompt information to the terminal device for each paging message that is not responded to.

It should be noted that, the preset whitelist is set, so that a prompt of the satellite is more targeted.

In some embodiments, the terminal device may also synchronize the foregoing terminated call prompt in a weak network environment. For example, the terminal device may have a foldable screen. After being folded, the terminal device may have poor antenna performance. In this case, based on the first prompt information presented by the terminal device, the terminal device may prompt, by using third prompt information, the user to unfold the screen for use. That is, when receiving the first prompt information, the terminal device may further initiate the third prompt information, to prompt the user to unfold the foldable screen of the terminal device.

It should be noted that the third prompt information may also be provided in at least one of a voice prompt manner, a vibration prompt manner, and an interface prompt manner.

In this embodiment of this application, when the terminal device cannot use a cellular network currently, if the paging message from the satellite is received, the first prompt information may be presented in a case in which the preset interface is not displayed currently. The first prompt information is used to indicate to perform a satellite pointing operation. When receiving the paging message from the target satellite, the terminal device may present the first prompt information. In this way, the user can quickly perceive that there is a satellite paging event, to quickly assist the terminal device in entering a satellite pointing interface to perform the satellite pointing operation, thereby accelerating establishment of the connection to the satellite, ensuring that a notified service is normally performed, and improving a success rate of implementing an emergency service such as an incoming call by the satellite.

All or some of the foregoing embodiments may be implemented by using software, hardware, firmware, or any combination thereof. When the software is used for implementation, all or some of the embodiments may be implemented in a form of a computer program product. The computer program product includes one or more computer instructions. When the computer instructions are loaded and executed on a computer, all or some of procedures or functions according to the embodiments of this application are produced. The computer may be a general-purpose computer, a dedicated computer, a computer network, or another programmable apparatus. The computer instructions may be stored in a computer-readable storage medium or transmitted from a computer-readable storage medium to another computer-readable storage medium. For example, the computer instructions may be transmitted from a website, computer, server, or data center to another website, computer, server, or data center in a wired manner (for example, a coaxial cable, an optical fiber, or a digital subscriber line (Digital Subscriber Line, DSL)) or a wireless manner (for example, infrared, wireless, or microwave). The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a digital versatile disc (Digital Versatile Disc, DVD)), a semiconductor medium (for example, a solid state disk (Solid State Disk, SSD)), or the like.

The foregoing descriptions are merely optional embodiments provided in this application, but are not intended to limit this application. Any modification, equivalent replacement, and improvement made within the technical scope disclosed in this application shall fall within the protection scope of this application.

## Claims

1. A terminated call method for a terminal device, applied to a terminal device, wherein the method comprises:
enabling a satellite communication function of the terminal device;
receiving a paging message from a satellite when the terminal device is in a satellite communication standby state, wherein the satellite communication standby state is a state in which no satellite pointing operation is performed when the satellite communication function is enabled; and
presenting first prompt information after the paging message is received and when a preset interface is not displayed currently, wherein the first prompt information is used to prompt a user to assist the terminal device in performing a satellite pointing operation, and the preset interface is an interface related to the satellite pointing operation.

2. The method according to claim 1, before the receiving a paging message from a satellite, further comprising:
performing an antenna tuning operation on at least one antenna for receiving a satellite signal in the terminal device when the terminal device is in the satellite communication standby state, so that receiving performance of at least one of the at least one antenna for receiving a satellite signal meets a preset condition.

3. The method according to claim 1 or 2, wherein after the presenting first prompt information, the method further comprises:
initiating a random access RACH process;
when no connection to the satellite is established, determining a quantity of times of initiating the RACH process; and
when the quantity of times of initiating the RACH process is less than or equal to a first threshold, returning an operation of initiating the RACH process; or
when the quantity of times of initiating the RACH process is greater than a first threshold and responding to a target service fails, presenting second prompt information if the preset interface is displayed currently, wherein the second prompt information is used to indicate to maintain the preset interface.

4. The method according to any one of claims 1-3, wherein after the presenting first prompt information, the method further comprises:
performing the satellite pointing operation to establish a connection to the satellite; and
receiving user prompt information from the satellite after the connection to the satellite is established, wherein the user prompt information comprises information about a user who pages the terminal device by using the paging message.

5. The method according to claim 4, wherein the information about the user is user information in a preset whitelist.

6. The method according to any one of claims 1-5, wherein after the enabling a satellite communication function of the terminal device, the method further comprises:
when there is no dedicated antenna in antennas of the terminal device, setting at least one antenna for receiving a cellular network signal in the terminal device to be in a receiving mode for receiving a satellite signal, wherein the dedicated antenna is an antenna specifically configured to receive a satellite signal.

7. The method according to any one of claims 1-6, wherein the enabling a satellite communication function of the terminal device comprises:
detecting a scenario in which the terminal device is located; and
setting the satellite communication function of the terminal device to an enabled state when the terminal device is in an outdoor scenario, wherein the outdoor scenario is a scenario in which strength of a cellular network signal is less than or equal to preset strength.

8. The method according to any one of claims 1-7, wherein the presenting first prompt information after the paging message is received and when a preset interface is not displayed currently comprises:
after the paging message is received and when the preset interface is not displayed currently, if the paging message is not responded to, presenting the first prompt information.

9. The method according to any one of claims 1-8, wherein the presenting first prompt information after the paging message is received and when a preset interface is not displayed currently comprises:
presenting the first prompt information in at least one prompt manner after the paging message is received and when the preset interface is not displayed currently, wherein the at least one prompt manner comprises a voice prompt manner, a vibration prompt manner, and an interface prompt manner.

10. The method according to any one of claims 1-9, wherein the satellite pointing operation comprises an operation of searching for the satellite, an operation of performing angle alignment with the satellite, an operation of connecting to the satellite, and an operation of indicating to maintain the connection to the satellite; and
the preset interface comprises a satellite search indication interface corresponding to the operation of searching for the satellite, an alignment indication interface corresponding to the operation of performing angle alignment with the satellite, a connection process indication interface corresponding to the operation of connecting to the satellite, and a connection maintenance indication interface corresponding to the operation of indicating to maintain the connection to the satellite.

11. A terminal device, wherein a structure of the terminal device comprises one or more processors and a memory;
the memory stores computer-executable instructions;
the one or more processors comprise a processor for satellite communication;
the one or more processors execute the computer-executable instructions stored in the memory, to enable the terminal device to perform the method according to any one of claims 1-10; and
the memory is configured to store a program that supports the terminal device in performing the method according to any one of claims 1-10.

12. A chip system, comprising at least one processor and a communication interface, wherein the communication interface and the at least one processor are interconnected through a line, and the at least one processor is configured to run a computer program or instructions to perform the method according to any one of claims 1-10.
